# EUROPÄISCHE PATENTSCHRIFT

(11) **EP 3 042 169 B1**
(45) Veröffentlichungstag und Bekanntmachung des Hinweises auf die Patenterteilung: **15.03.2023**
(21) Anmeldenummer: 14758408.0
(22) Anmeldetag: 03.09.2014
(51) Int. Cl.: G01J 3/12, G02B 21/00, G02B 27/28

(54) **MIKROSKOP UND AKUSTOOPTISCHER STRAHLVEREINIGER FÜR EIN MIKROSKOP**
SCANNING MICROSCOPE AND ACOUSTO-OPTICAL BEAM COMBINER FOR SCANNING MICROSCOPE
MICROSCOPE À BALAYAGE ET COMBINATEUR DE FAISCEAU ACOUSTO-OPTIQUE POUR MICROSCOPE À BALAYAGE

(30) Priorität: 03.09.2013 DE 102013217497; 23.12.2013 DE 102013227105
(43) Veröffentlichungstag der Anmeldung: 13.07.2016
(73) Patentinhaber: Leica Microsystems CMS GmbH, 35578 Wetzlar (DE)
(72) Erfinder: SEYFRIED, Volker, 69226 Nussloch (DE); KRISHNAMACHARI, Vishnu Vardhan, 64342 Seeheim-Jugenheim (DE)
(74) Vertreter: Bradl, Joachim
(86) Internationale Anmeldenummer: PCT/EP2014/068748
(87) Internationale Veröffentlichungsnummer: WO 2015/032820

(56) Entgegenhaltungen:
- EP-A2- 1 085 362
- WO-A1-00/39545
- DE-A1- 19 906 757
- DE-A1-102004 054 262
- US-A1- 2003 107 732
- Thomas J Fellers: "Olympus Fluoview Resource Center: Acousto-Optic Tunable Filters", , 19. März 2013 (2013-03-19), XP055153859, Gefunden im Internet: URL:https://web.archive.org/web/2013031908 5942/http://www.olympusconfocal.com/theory /aotfintro.html [gefunden am 2014-11-19]

## Beschreibung

Die Erfindung betrifft ein Mikroskop mit einem akustooptischen Strahlvereiniger, wobei der akustooptische Strahlvereiniger wenigstens ein erstes Beleuchtungslichtbündel und ein zweites Beleuchtungslichtbündel empfängt und zu einem kollinearen Ausgangslichtbündel vereinigt, wobei das erste Beleuchtungslichtbündel und das zweite Beleuchtungslichtbündel dieselbe Beleuchtungslichtwellenlänge, jedoch eine unterschiedliche Polarisation, insbesondere Linearpolarisation, aufweisen, wobei der Strahlvereiniger als akustooptischer Strahlvereiniger ausgebildet und derart aufgebaut und betrieben ist, dass durch Wechselwirkung mit wenigstens einer mechanischen Welle sowohl das erste Beleuchtungslichtbündel, als auch das zweite Beleuchtungslichtbündel gebeugt und dadurch auf eine gemeisame optische Achse gelenkt werden.

Die Erfindung betrifft außerdem die Verwendung eines solchen Mikroskops mit einem akustooptischen Strahlvereiniger.

In einem Mikroskop, insbesondere in einem Scanmikroskop oder einem konfokalen Scanmikroskop, werden Proben häufig mit einem Beleuchtungslichtbündel beleuchtet, das durch Vereinigung mehrerer Beleuchtungslichtbündel erzeugt wurde, um das von der beleuchteten Probe emittierte Reflexions- oder Fluoreszenzlicht zu beobachten.

Beispielsweise in der Scanmikroskopie wird der Fokus eines solchen Beleuchtungslichtbündel mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, und der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Beleuchtungslichtbündels in drei Dimensionen abgetastet. Ein konfokales Scanmikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird beispielsweise über einen Strahlteiler eingekoppelt.

Das vom Objekt kommende Fluoreszenzlicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt.

Zum Vereinigen von Lichtbündeln unterschiedlicher Wellenlänge werden in der Optik üblicherweise dichroitische Strahlteiler eingesetzt. Aus DE 196 33 185 A1 ist beispielsweise eine Punktlichtquelle für ein Laserscanmikroskop und ein Verfahren zum Einkoppeln des Lichtes von mindestens zwei Lasern unterschiedlicher Wellenlänge in ein Laserscanmikroskop bekannt. Die Punktlichtquelle ist modular ausgestaltet und beinhaltet einen dichroitischen Strahlvereiniger, der das Licht mindestens zweier Laserlichtquellen vereinigt und in eine zum Mikroskop führende Lichtleitfaser einkoppelt.

Anordnungen auf der Basis von dichroitischen Strahlteilern haben den Nachteil, dass sie auf bestimmte Wellenlängen festgelgt sind und demgemäß nur umständlich, nämlich durch Austauschen der dichroitischen Strahlteiler, möglich ist.

Aus EP 165 65 78 A1 ist eine optische Vorrichtung zur kollinearen Vereinigung von Lichttstrahlen unterschiedlicher Wellenlänge bekannt. Diese Vorrichtung beinhaltet ein dispersives Element und eine Abbildungsoptik die eine Aufspaltungsebene definieren, in der jeder Lichtwellenlänge ein Ort zugeordnet ist. In der Aufspaltungsebene ist ein mikrostrukturieries Element angeordnet, das aus unterschiedlichen Richtungen kommende und auf die ihrer Wellenlänge entsprechenden Orte fokussierte Lichtstrahlen über die Abbildungsoptik zu dem dispersiven Element lenkt, das die Lichtstrahlen kollinear vereinigt. Allerdings ist die Vorrichtung technisch, insbesondere auch hinsichtlich der Justage, sehr aufwändig und erlaubt keine sehr schnellen Schaltzeiten.

Aus EP 215 85 13 A1 ist ein Strahlvereiniger zum Vereinigen mindestens zweier Lichtstrahlen zu einem vereinigten Lichtstrahl, insbesondere im Strahlengang einer optischen Anordnung, vorzugsweise eines Mikroskops, bekannt. Der Strahlvereiniger ist durch ein akustooptisches Element gekennzeichnet, in dem eine mechanische Welle zum Ablenken oder Beugen von Lichtstrahlen erzeugbar ist, so dass ein in das akustooptische Element eintretender erster Lichtstrahl und mindestens ein in das akustooptische Element eintretender zweiter Lichtstrahl das akustooptische Element als vereinigter Lichtstrahl kollinear zueinander verlassen. Das Vereinigen von Lichtstrahlen derselben Wellenlänge, jedoch unterschiedlicher Polarisation offenbart diese Druckschrift nicht.

Auch eine Vereinigung von Lichtstrahlen mit Hilfe von Polarisationsstrahlteilern ist gemäß der EP 0 473 071 B1 bekannt. Eine solche Anordnung ist jedoch im Ergebnis ähnlich unflexibel, nämlich durch Austausch wesentlicher Komponenten, einsetzbar, wie Vorrichtungen mit dichroitischen Strahlteilern.

Die WO 00/39545 beschreibt eine Anordnung von zwei Lichtquellen, die Licht unterschiedlicher Wellenlänge und zueinander senkrechter Polarisation aussenden. Ein Kristall eines akustooptischen Strahlvereinigers wird dabei derart mit jeweils auf eine der Lichtquellen abgestimmten mechanischen Wellen beaufschlagt, dass beide von den Lichtquellen ausgesandten Lichtbündel den Strahlvereiniger kollinear verlassen.

Die DE 10 2004 054 262 A1 beschreibt die Verwendung eines akustooptischen Elements zur Einkopplung eines Lichtstrahls auf einen Beleuchtungsstrahlengang.

Es ist daher die Aufgabe der vorliegenden Erfindung ein Mikroskop mit einem akustooptischen Strahlvereiniger anzugeben, der das Vereinigen von Beleuchtungslichtbündeln derselben Wellenlänge, jedoch unterschiedlicher Polarisation erlaubt und der schnell und einfach an geänderte Bleuchtungsanforderungen anpassbar ist. Die Aufgabe wird durch ein Mikroskop mit den Merkmalen von Anspruch 1 sowie die Verwendung dieses Mikroskops gemäss Anspruch 8 gelöst. Vorteilhafte Ausführungen sind in den abhängigen Ansprüchen definiert.

Der Strahlvereiniger des erfindungsgemäßen Mikroskops hat den ganz besonderen Vorteil, dass der akustooptische Strahlvereiniger sehr schnell, innerhalb von wenigen Mikrosekunden, geschaltet werden kann. Auf diese Weise kann ein Beleuchtungslichtbündel beispielsweise schnell unterbrochen oder wieder freigegeben werden. Auch die Möglichkeit eines schnellen Umschaltens zu anderen Wellenlängen ist oder anderen Wellenlängenkombinationen ist ein besonderer Vorteil des Strahlvereinigers des erfindungsgemäßen Mikrosokps.

Die Funktionsweise eines solchen akustooptischen Strahlvereinigers beruht im Wesentlichen auf der Wechselwirkung der eingekoppelten Beleuchtungslichtbündel mit einer mechanischen Welle oder mehreren mechanischen Wellen.

Akustooptische Bauteile bestehen in der Regel aus einem sogenannten akustooptischen Kristall, an dem ein elektrischer Wandler (in der Literatur oft als Transducer bezeichnet) angebracht ist. Üblicherweise umfasst der Wandler ein piezoelektrisches Material sowie eine darüber liegende und eine darunter liegende Elektrode. Durch elektrisches Beschalten der Elektroden mit Radiofrequenzen, die typischer Weise im Bereich zwischen 30 MHz und 800 MHz liegen, wird das piezoelektrische Material zum Schwingen gebracht, so dass eine akustische Welle, d.h. eine Schallwelle, entstehen kann, die nach ihrer Entstehung den Kristall durchläuft. Meist wird die akustische Welle nach dem Durchlaufen eines optischen Wechselwirkungsgebiets an der gegenüberliegenden Kristallseite absorbiert oder weg reflektiert.

Akustooptische Kristalle zeichnen sich dadurch aus, dass die entstehende Schallwelle die optischen Eigenschaften des Kristalls verändert, wobei durch den Schall eine Art optisches Gitter oder eine vergleichbare optisch aktive Struktur, beispielsweise ein Hologramm, induziert wird. Durch den Kristall tretendes Licht erfährt an dem optischen Gitter eine Beugung. Entsprechend wird das Licht in verschiedenen Beugungsordnungen in Beugungsrichtungen gelenkt. Es gibt akustooptische Bauteile, die das gesamte einfallende Licht mehr oder weniger unabhängig von der Wellenlänge beeinflussen. Dazu sei lediglich beispielhaft auf Bauteile wie AOM, AOD und Frequenzschieber verwiesen. Außerdem gibt es auch bereits Bauteile, die beispielsweise abhängig von den eingestrahlten Radiofrequenzen selektiv auf einzelne Wellenlängen wirken (AOTFs). Häufig bestehen die akustooptischen Elemente aus doppelbrechenden Kristallen, wie beispielsweise Tellurdioxid, wobei insbesondere die Lage der Kristallachse relativ zur Einfallsrichtung des Lichts und seiner Polarisation die optische Wirkung des jeweiligen Elements bestimmt.

Insbesondere, wenn in dem akustooptischen Strahlvereiniger beispielsweise ein AOTF verwendet wird, muss die mechanische Welle eine ganz bestimmte Frequenz aufweisen, damit genau für das Licht der gewünschten Beleuchtungslichtwellenlänge und der gewünschten Polarisation die Bragg-Bedingung erfüllt ist. Licht, für das die Bragg-Bedingung nicht erfüllt ist, wird bei diesen akustooptischen Bauteilen durch die mechanische Welle nicht abgelenkt.

Bei einer besonders einfachen Ausführung eines Strahlvereinigers des erfindungsgemäßen Mikrosokps, bei der dieser beispielsweise einen handelsüblichen AOTF beinhalten kann, weist der akustooptische Strahlvereiniger einen Kristall auf, durch den gleichzeitig eine erste und eine zweite mechanische Welle unterschiedlicher Schallfrequenz propagieren, wobei der Kristall und die Ausbreitungsrichtung der mechanischen Wellen relativ zueinander und jeweils relativ zu den in den Kristall einfallenden Beleuchtungslichtbündeln derart ausgerichtet sind, dass an der ersten mechanischen Welle das erste Beleuchtungslichtbündel und an der zweiten mechanischen Welle das zweite Beleuchtungslichtbündel gebeugt und dadurch auf eine gemeisame optische Achse gelenkt werden.

Von besonderem Vorteil ist es hierbei, wenn das vereinigte Beleuchtungslichtbündel den Kristall durch eine senkrecht zur Ausbreitsungrichtung des Beleuchtungslichtbündels ausgerichtetes Austrittsfläche verläßt. Bei einem Wechsel der Wellenlänge oder wenn mehrere Wellenlängen wenn das Beleuchtungslichtbündel mehrere Wellenlängen aufweist, kommt es nicht zu Richtungsänderungen bzw. zu einer räumlichen Aufspaltung des Beleuchtungslichtbündels.

Allerdings hat diese Ausführung den Nachteil, dass zum Ablenken von zwei Beleuchtungslichtbündeln, die zwar dieselbe Wellenlänge, jedoch unterschiedliche Polarisation aufweisen, zwei verschiedene mechanische Wellen erzeugt werden müssen. Insoweit muss der Erzeuger für die mechanischen Wellen, beispielweise ein an dem Kristall angeortnetes Piezo-Element, gleichzeitig mit zwei unterschiedlichen elektromagnetischen HF-Wellen beaufschlagt werden. Hierdurch wird, in nachteiliger Weise, die doppelte Menge an Wärmeleistung in den Kristall bzw. die Kristalle eingetragen, was letztlich die Beugungseffizienz reduziert und dazu führt, dass durch die unvermeidbaren Temperaturschwankungen auch die Ablenkungsrichtungen und damit die Lichtleistungen des an der Probe und am Detektor ankommenden Lichtes schwanken. Außerdem kann es, wenn die Frequenzbereiche der mechansichen Wellen überlappen, zu Schwebungen kommen, , was letztlich zu periodischen Schwankungen der Lichtleistung des an der Probe und/oder am Detektor ankommenden Lichtes führt. Dieses Problem basiert insbesondere auf der Tatsache, dass die mechanischen Wellen naturgemäß keine unendlich schmale, also singuläre, Schallfrequenz aufweisen können, sondern vielmehr immer ein Frequenzbereich um eine Mittenfrequenz vorhanden sein muss.

Bei einer ganz besonders vorteilhaften Ausführung wird daher kein handelsüblicher AOTF verwendet. Vielmehr weist der akustooptische Strahlvereiniger einen Kristall auf, durch den eine mechanische Welle einer der Wellenlänge des ersten und des zweiten Beleuchtungslichtbündels zugeordneten Schallfrequenz propagiert, wobei der Kristall und die Ausbreitungsrichtung der mechanischen Welle relativ zueinander und jeweils relativ zu den in den Kristall einfallenden Beleuchtungslichtbündeln derart ausgerichtet sind, dass an der mechansichen Welle sowohl das erste Beleuchtungslichtbündel, als auch das zweite Beleuchtungslichtbündel gebeugt und dadurch auf eine gemeisame optische Achse gelenkt werden.

Hierbei kann insbesondere vorgesehen sein, dass das erste Beleuchtungslichtbündel linear polarisiert ist und eine Linearpolarisationsrichtung aufweist, die die Linearpolarisationsrichtung des ordentlichen Lichtes bezogen auf eine Doppelbrechungseigenschaft des Kristalles ist und/oder dass das zweite Beleuchtungslichtbündel linear polarisiert ist und eine Linearpolarisationsrichtung aufweist, die die Linearpolarisationsrichtung des außerordentlichen Lichtes bezogen auf eine Doppelbrechungseigenschaft des Kristalles ist. Insbesondere kann auch vorgesehen sein, dass die Linearpolarisationsrichtung des ersten Beleuchtungslichtbündels oder die Linearpolarisationsrichtung des zweiten Beleuchtungslichtbündels in der Ebene angeordnet ist, die von der Ausbreitungsrichtung der mechanischen Welle und der Ausbreitungsrichtung des Detektionslichtbündels aufgespannt ist.

Die konkrete Ausgestaltung eines solchen akustooptischen Strahlvereinigers, insbesondere die Ausrichtung des Kristalls relativ zur Ausbreitungsrichtung der mechanischen Welle(n) und der Ausbreitungsrichtung der Beleuchtungslichtbündel, sowie die Ausrichtung der mechanischen Welle und der Beleuchtungsslichtbündel relativ zueinander, und auch die Ausrichtung der Ein- und Austrittsflächen zueinander und zur optischen Achse des Kristalls kann beispielsweise nach dem nachfolgend geschilderten, iterativen Verfahren entwickelt werden, wobei das Verfahren vorzugsweise nicht an Hand von realen Bauteilen, was allerdings auch möglich wäre, sondern in einer Computersimulation nachvollzogen wird, bis die einzelnen Parameter der Kristallform, der Ausrichtung der Flächen und des Kristallgitters, die Ausrichtung der Ausbreitungsrichtung der mechanischen Welle(n) und die Ausbreitungsrichtungen der Beleuchtungslichtbündel den gewünschten Anforderungen entsprechen. Wenn in einer Computersimulation sämtliche relevante Parameter auf diese Weise ermittelt wurden, kann der Kristall anschließend in einem weiteren Schritt hergestellt werden.

Hierbei kann beispielsweise zunächst von der Ausführung ausgegangen werden, die weiter oben beschrieben ist und bei der der akustooptische Strahlvereiniger einen handelsüblichen Kristall aufweist, durch den eigentlich gleichzeitig eine erste und eine zweite mechansiche Welle unterschiedlicher Schallfrequenz propagieren müssten, um sowohl das erste Beleuchtungslichtbündel, als auch das zweite Beleuchtungslichtbündel auf eine gemeisame optische Achse zu lenken.

Für das Iterationsverfahren wird der umgekehrte Lichtweg betrachtet und auf dem umgekehrten Lichtweg das erste und das zweite Beleuchtungslichtbündel kollinear durch die - vorzugsweise senkrecht ausgerichtete - Austrittsfläche in den Kristall eingekoppelt, aber lediglich die erste der mechanischen Wellen in dem Kristall erzeugt. Dies hat zur Folge, dass lediglich das erste Beleuchtungslichtbündel an der mechanischen Welle gebeugt wird, während das zweite Lichtbündel, das zwar dieselbe Wellenlänge, jedoch die andere Linearpolarisationsrichtung aufweist, den Kristall unabgelenkt durchläuft.

Anschließend wird der Kristall vorzugsweise in der Ebene, die durch das einfallende kollineare Beleuchtungslichtbündel und die Ausbreitungsrichtung der mechanischen Welle aufgespannt ist, so weit gedreht und damit auch die Winkel zwischen der Ausbreitungsrichtung der mechanischen Welle und den Kristallachsen verändert, bis mit der mechanischen Welle beide Beleuchtungslichtbündel beider Linearpolarisationsanteile abgelenkt werden.

Allerdings hat die Drehung in der Regel zur Folge, dass die Austrittsfläche nicht mehr senkrecht zum einfallenden kollinearen Beleuchtungslichtbündel steht. Aus diesem Grund wird nun in einem nächsten Iterationsschritt - ohne den Kristall zu drehen - die Form des Kristalls derart geändert, dass die Austrittsfläche wieder senkrecht zum einfallenden kollinearen Beleuchtungslichtbündel steht.

Allerdings haben die Änderungen an der Kristallform in der Regel zur Folge, dass mit der mechanischen Welle nicht mehr jeweils beide Linearpolarisationsanteile der Beleuchtungslichtwellenlänge abgelenkt werden. Aus diesem Grund wird der Kristall nun wieder gedreht, bis diese Bedingung wieder erfüllt ist. Dann werden die bereits beschriebenen, weiteren Iterationsschritte wiederholt.

Es werden so viele Iterationszyklen durchgeführt, bis die Bedingung einer gleichzeitigen Ablenkung beider Linearpolarisationsanteile und die Bedingung eines kollinearen Lichtaustritts erfüllt sind. In der Regel konvergiert das Verfahren sehr schnell, so dass nach wenigen Iterationszyklen das Ziel erreicht ist.

Bei einer besonderen Ausführung wird beim Drehen des Kristalls jeweils darauf geachtet, dass in Bezug auf eine der Linearpolarisationsrichtungen des umgekehrt verlaufenden Beleuchtungslichts das gesamte, in die erste Ordnung gebeugte Licht, das die Beleuchtungslicht Wellenlängen aufweist, kollinear aus dem Kristall austritt. Eine solche Ausführung hat nicht nur den Vorteil, dass jeweils mit einer einzigen mechanischen Welle jeweils beide Anteile unterschiedlicher Linearpolarisation ablenkt, sondern auch dass zusätzlich auch über den Lichtweg der ersten Beugungsordnung, bei der die oben beschriebene Kollinearität besteht, mehrfarbiges, kollinear einfallendes Beleuchtungslicht kollinear auf ein Beleuchtungslichtstrahlengang gebeugt werden kann. Für dieses Beleuchtungslicht bedarf es in vorteilhafter Weise keiner Kompensation räumlicher Aufspaltungen, weil es diese für dieses Bleuchtungslicht nicht gibt.

Bei einer solchen Ausführung kann beispielsweise vorgesehen sein, dass der Kristall oder der zweite Kristall eine Eintrittsfläche für Primärlicht mehrerer Wellenlängen und eine Austrittsfläche für das auf die gemeinsame optische Achse gelenkte Beleuchtungslichtbündel aufweist, wobei die Eintrittsfläche und die Austrittsfläche derart zueinander ausgerichtet sind, dass das Primärlicht als kollineares Beleuchtungslichtbündel in den Kristall einkoppelbar ist und das auf die gemeinsame optische Achse gelenkte Beleuchtungslichtbündel den Kristall als kollineares Beleuchtungslichtbündel verlässt.

Bei einer vorteilhaften Ausführung ist vorgesehen, dass durch den Kristall weingstens ein weiters Beleuchtungslichtbündel, das nicht die Wellenlänge des ersten und zweiten Beleuchtungslichtbündels aufweist und das nicht an der mechanischen Welle gebeugt wird, verläuft und gemeinsam mit dem ersten und dem zweiten Beleuchtungslichtbündel auf die gemeinsame optische Achse gelangt. Eine solche Ausführung erlaubt insbesondere das Hinteranderschalten meherer akustooptischer Bauteile, was nachfolgend im Detail beschrieben ist.

Beispielsweise kann vorgesehen sein, dass das weitere Beleuchtungslichtbündel von einem zweiten Kristall ausgeht, in dem eine zweite mechanische Welle propagiert, die eine der Wellenlänge des weitern Beleuchtungslichtbündels zugeordnete Schallfrequenz aufweist, wobei das weitere Beleuchtungslichtbündel ein drittes Beleuchtungslichtbündel der weiteren Beleuchtungslichtwellenlänge beinhaltet, das von der zweiten mechanischen Welle gebeugt wurde oder dass das weitere Beleuchtungslichtbündel ein drittes und ein viertes Beleuchtungslichtbündel der weiteren Beleuchtungslichtwellenlänge, jedoch unterschiedlicher Polarisation, insbesondere Linearpolarisation, beinhaltet, die von der zweiten mechanischen Welle gebeugt wurden. Zur Realisierung der letztgenannten Variante sollte der zweite Kristall vorzugsweise so aufgebaut sein, dass er, wie oben ausführlich geschildert, das Beleuchtungslicht der weiteren Wellenlänge unabhängig von dessen Polarisation ablenkt.

Wie bereits angesprochen kann vorteilhaft vorgesehen sein, dass die zuvor geschilderten Prinzipien gleichzeitig mehrfach angewendet werden, indem in wenigstens einem Kristall mehrere mechanische Wellen unterschiedlicher Frequenzen für Beleuchtungslicht unterschiedlicher Wellenlängen erzeugt werden.

Beispielsweise kann vorgesehen sein, dass in dem Kristall oder in dem zweiten Kristall simultan wenigstens eine zusätzliche mechanische Welle propagiert, die eine, einer zusätzlichen Wellenlänge zugordnete andere Schallfrequenz aufweist, wobei an der zusätzlichen mechanischen Welle wenigstens ein zusätzliches Bleuchtungslichtbündel, das die andere Wellenlänge aufweist gebeugt und dadurch auf die gemeisame optische Achse gelenkt wird, und/oder wobei an der zusätzlichen mechanischen Welle zwei zusätzliche Bleuchtungslichtbündel, die die andere Wellenlänge und eine voneinander verschiedene Polarisation, insbesondere Linearpolarisation, aufweisen, gebeugt und dadurch auf die gemeisame optische Achse gelenkt werden.

Bei einer besonderen Ausführung weist der akustooptische Strahlvereiniger wenigstens ein dispersives optisches Bauteil auf, das eine (wenigstens teilweise) von dem Kristall oder dem zweiten Kristall hervorgerufene räumliche, spektrale Aufspaltung kompensiert. Hierbei kann es sich beispielsweise um eine Aufspaltung eines Beleuchtungslichtbündels, das Licht mehrerer Wellenlängen beinhaltet, handeln. Es kann jedoch auch vorgesehen sein, dass das dispersive optische Bauteil - auch zusätzlich zu einer Kompensation einer Aufspaltung von Beleuchtunglicht - eine räumlich spektrale Aufspaltung von Detektionslicht kompensiert.

Das dispersive optisches Bauteil kann so angeordnet sein, dass es eine bereits erfolgte räumlich spektrale Aufspaltung wieder rückgängig macht. Die Kompensation kann aber auch in der Weise erfolgen, dass das dispersive optische Bauteil eine räumlich spektrale Aufspaltung verursacht, die von dem Kristall oder dem zweiten Kristall rückgängig gemacht wird.

Der akustooptische Strahlvereiniger kann in ganz besonders vorteilhafter Weise Teil einer Lichtquelle für ein Mikroskop, insbesondere Scanmikroskop oder konfokales Scanmikroskop, sein. Eine solche Lichtquelle kann insbesondere mehrere Primärlichtquellen aufweisen, deren Beleuchtungslichtbüdel der akustooptischen Strahlvereiniger vereinigt.

Es ist auch möglich, dass wenigstens eine der Primärlichtquellen unpolarisiertes Primärlicht, insbesonder Weißlicht, erzeugt. Eine solche Lichtquelle kann beispielsweise einen Polarisationsstrahlteiler aufweisen, der das unpolarisierte Primärlicht empfängt und räumlich, in Abhängigkeit von der Linearpolarisationsrichtung aufspaltet, so dass die entstehenden Beleuchtungslichtstrahlenbündel über unterschiedliche Eingänge eines Kristalls oder mehrerer Kristalle der Wirkung der mechanischen Welle bzw. der Wirkung der mechanischen Wellen ausgesetzt werden können. Auf diese Weise kann ganz gezielt und äußerst flexibel umschaltbar Beleuchtungslicht einer oder mehrerer Wellenlängen ausgewählt und kollinear auf einen Beleuchtungsstrahlengang zur Beleuchtung einer Probe gelenkt werden; dies ohne, dass etwas von dem unpolarisierten Primärlicht - abgesehen von den üblichen Verlusten bein Ein- und Auskoppeln aus optischen Bauteilen -verloren geht. Insbesondere muss nicht grundsätzlich auf das Licht einer Linearpolarisationsrichtung gänzlich verzichtet werden.

Der akustooptische Strahlvereiniger kann in ganz besonders vorteilhafter Weise Teil eines Mikroskop, insbesondere eines Scanmikroskops oder eines konfokalen Scanmikroskops sein. Insbesondere bei Mikroskopietechiken, bei denen eine Probe simultan oder sequentiell mit Beleuchtungslicht unterschiedlicher Eigenschaften zu beaufschlagen ist, wie bei bei der Beleuchtung einer Probe in der STED-Mikroskopie (Stimulated Emission Depletion) oder in der CARS-Mikroskopie (Coherent Anti Stokes Raman Spectroscopy) oder in der SRS-Mikroskopie (Stimulated Raman Scattering) oder in der CSRS-Mikroskopie (Coherent Stokes Raman Scattering) oder in der Rikes-Mikroskopie (Raman induced Kerr-Effect Scattering), ist ein solches Mirkoskop sehr vorteilhaft einsetzbar, weil die Beleuchtungsparameter schnell und flexibel, auch hinsichtlich der Polarisation des Beleuchtungslichtes, einstellbar sind, wobei keine großen Verluste an Primärlichtleitung durch eine vorzunehmende Strahlvereinigung in Kauf genommen werden müssen.

Aber auch im Bereich der normalen Fluoreszenzmikroskopie ist ein solches Mikroskop von Vorteil. Insbesondere hierbei kann vorteilhaft vorgesehen sein, dass der akustooptische Strahlvereiniger von einer Probe ausgehendes Detektionslicht empfängt und aus diesem Detektionslicht die Anteile entfernt, die die Beleuchtungslichtwellenlänge und/oder die weitere Beleuchtungslichtwellenlänge und/oder die andere Beleuchtungslichtwellenlänge aufweisen.

In der Fluoreszenzmikroskopie müssen nämlich die Anteile von an der Probe reflektiertem und an der Probe gestreutem Beleuchtungslicht aus dem Detektionslicht entfernt werden, um ausschließlich das Fluoreszenzlicht detektieren zu können. Hierzu wird bei einem klassischen Mikroskop ein dichroitischer Filter, als sog. Hauptstrahlteiler verwendet.

Bei einer besonderen Ausführung wird aus einem von einer Probe kommenden Detektionslichtbündel durch Wechselwirkung mit der mechanischen Welle des Kristalls sowohl ein die Beleuchtungslichtwellenlänge und eine erste Linearpolarisationsrichtung aufweisender Anteil des Detektionslichtbündes, als auch ein die Beleuchtungslichtwellenlänge und eine zweite, zur ersten Linearpolarisationsrichtung senkrechte Linearpolarisationsrichtung aufweisender Anteil des Detektionslichtes abgelenkt - und dadurch aus dem Detektionslichtbündel entfernt. Alternativ oder zusätzlich kann auch vorgesehen sein, dass aus einem von einer Probe kommenden Detektionslichtbündel durch Wechselwirkung mit der mechanischen Welle des zweiten Kristalls sowohl ein die weitere Beleuchtungslichtwellenlänge und eine erste Linearpolarisationsrichtung aufweisender Anteil des Detektionslichtbündes, als auch ein die weitere Beleuchtungslichtwellenlänge und eine zweite, zur ersten Linearpolarisationsrichtung senkrechte Linearpolarisationsrichtung aufweisender Anteil des Detektionslichtes abgelenkt - und dadurch aus dem Detektionslichtbündel entfernt werden.

Alternativ oder zusätzlich es es auch möglich, dass der Kristall und die Ausbreitungsrichtung der mechanischen Welle relativ zueinander und jeweils relativ zu dem in den Kristall einfallenden Detektionslichtbündel derart ausgerichtet sind, dass der akustooptische Strahlvereiniger mit der mechanischen Welle sowohl den die Beleuchtungswellenlänge und eine erste Linearpolarisationsrichtung aufweisenden Anteil des Detektionslichtbündels, als auch den die Beleuchtungswellenlänge und eine zweite, zur ersten Linearpolarisationsrichtung senkrechten Linearpolarisationsrichtung aufweisenden Anteil des Detektionslichtbündels ablenkt und dadurch aus dem Detektionslichtbündel entfernt, und/oder dass der zweite Kristall und die Ausbreitungsrichtung der zweiten mechanischen Welle relativ zueinander und jeweils relativ zu dem in den zweiten Kristall einfallenden Detektionslichtbündel derart ausgerichtet sind, dass der akustooptische Strahlvereiniger mit der zweiten mechanischen Welle sowohl den die weitere Beleuchtungswellenlänge und eine erste Linearpolarisationsrichtung aufweisenden Anteil des Detektionslichtbündels, als auch den die weitere Beleuchtungswellenlänge und eine zweite, zur ersten Linearpolarisationsrichtung senkrechten Linearpolarisationsrichtung aufweisenden Anteil des Detektionslichtbündels ablenkt und dadurch aus dem Detektionslichtbündel entfernt.

Wie bereits analog in Bezug auf eine Hintereinanderschaltung der Kristalle angesprochen, kann in vorteilhafter Weise vorgesehen sein, dass das Detektionslichtbündel zuerst den Kristall und anschließend den zweiten Kristall durchläuft.

Unabhängig von der speziellen Ausführung des akustooptischen Strahlvereinigers, jedoch insbesondere bei einem akustooptischen Strahlvereiniger, bei dem eine mechanische Welle auf die Lichtanteile einer Beleuchtungslichtwellenlänge und beider Linearpolarisationsrichtungen wirkt, kann vorteilhaft vorgesehen sein, dass die strahlführenden Komponenten des Strahlvereinigers derart angeordnet und ausgebildet sind, dass der verbliebene Teil des Detektionslichtbündels den akustooptischen Strahlvereiniger kollinear verlässt. Auf diese Weise kann das Detektionslichtbündels einfach einem Detektor, beispielsweise einem Multibanddetektor, zugeleitet werden.

Wie bereits mehfach angedeutet kann der akustooptische Strahlvereiniger des erfindungsgemäßen Mikrosokps oder die mit einem solchen Strahlvereiniger ausgerüstete Lichtquelle bei der Beleuchtung einer Probe oder bei der Beleuchtung einer Probe in der STED-Mikroskopie (Stimulated Emission Depletion) oder in der CARS-Mikroskopie (Coherent Anti Stokes Raman Spectroscopy) oder in der SRS-Mikroskopie (Stimulated Raman Scattering) oder in der CSRS-Mikroskopie (Coherent Stokes Raman Scattering) oder in der Rikes-Mikroskopie (Raman induced Kerr-Effect Scattering) eingesetzt werden.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein Ausführungsbeispiel eines erfindungsgemäßen Mikroskops mit einem Strahlvereiniger und einem weiteren akustooptischen Strahlvereiniger, der als Hauptstrahlteiler fungiert.
- Fig. 2: ein Ausführungsbeispiel eines akustooptischen Strahlvereinigers,
- Fig. 3: ein zweites Ausführungsbeispiel eines akustooptischen Strahlvereinigers,
- Fig. 4: ein drittes Ausführungsbeispiel eines akustooptischen Strahlvereinigers in Bezug auf die Behandlung des Detektionslicht,
- Fig. 5: das dritte Ausführungsbeispiel in Bezug auf das Lenken des Beleuchtungslichts,
- Fig. 6: das dritte Ausführungsbeispiel in Bezug auf eine spezielle Verwendungsmöglichkeit in der STED-Mikroskopie, und
- Fig. 7: ein viertes Ausführungsbeispiel eines akustooptischen Strahlvereinigers.

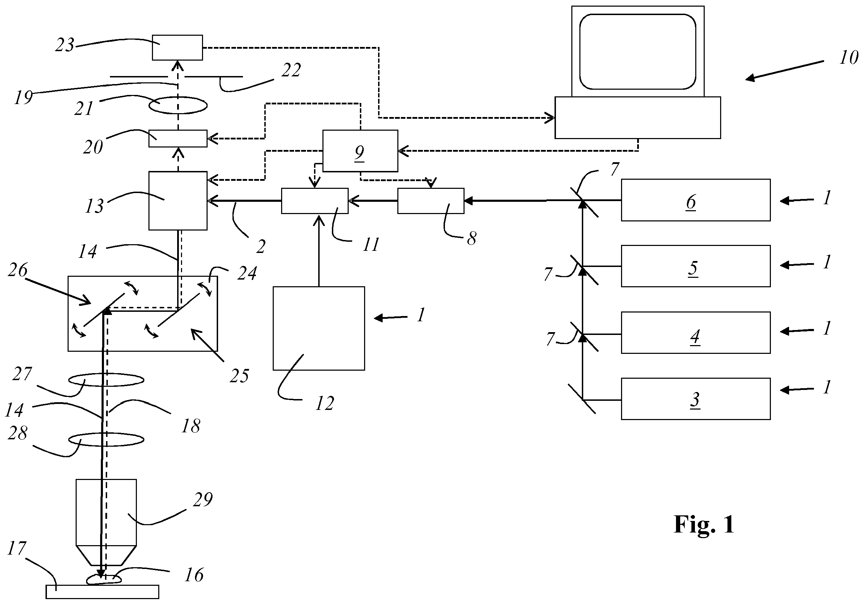

Fig. 1 zeigt ein als konfokales Scanmikroskop ausgebildetes erfindungsgemäßes Mikroskop, das mit einem akustooptischen Strahlvereiniger 11 und mit weiteren akustooptischen Strahlvereiniger 13, der als Hauptstrahlteiler fungiert, ausgerüstet ist.

Das Mikroskop beinhaltet mehrere Lichtquellen 1, deren Licht zu einem kollinearen Beleuchtungslichtbündel 2 vereinigt wird. Konkret beinhaltet das Mikroskop einen Diodenlaser 3, einen, vorzugsweise diodengepumpten, Festkörperlaser 4 (DPSS-Laser; diode pumped solid state laser), einen Helium-Neon-Laser 5 und einen Argonionen-Laser 6, deren Emissionslichtbündel mit Hilfe von dichroitischen Strahlteilern 7 vereinigt werden. Die vereinigten Emissionslichtbündel gelangen anschließend zu einem AOTF 8 (acousto optical tunable filter), der es erlaubt, aus dem vereinigten Emissionslichtbündel Licht bestimmter Wellenlängen auszuwählen und weiter zu leiten. Hierzu wird der AOTF 8 mit elektromagnetischen Hochfrequenzwellen einer Hochfrequenzquelle 9 beaufschlagt, wobei der Benutzer durch Eingabe über einen PC 10 festlegen kann, welche Wellenlänge bzw. welche Wellenlängen das weitergeleitete Licht aufweisen soll und wobei die Frequenz der Hochfrequenzquelle 9 automatisch von dem Mikroskop entsprechend eingestellt wird. Innerhalb des AOTF 8 werden mit Hilfe der elektromagnetischen Hochfrequenzwellen mechanische Wellen zum Beugen des gewünschten Lichtes erzeugt.

Das Mikroskop weist darüber hinaus einen akustooptischen Strahlvereiniger 11 auf, der einerseits das von dem AOTF 8 weitergeleitete Licht und andererseits das Licht einer Weißlichtquelle 12 empfängt.

Eine solche Weißlichtquelle 12 kann insbesondere ein spezielles optisches Element, wie beispielsweise ein mikrostrukturiertes optisches Element und/oder eine tapered Faser und/oder eine photonische Kristallfaser und/oder einen photonischen Kristall und/oder ein Photonic-Band-Gap-Material und/oder ein vergleichbares, optisches Nichtlinearitäten induzierendes Element, aufweisen, das einfallendes Primärlicht, insbesondere das Licht eines Pulslasers, spektral verbreitert. Eine solche Lichtquelle kann Primärlichts einer spektralen Breite von mehreren 10 nm, insbesondere von mehreren 100 nm, zur Verfügung stellen.

Der akustooptische Strahlvereiniger 11 ist ebenfalls mit elektromagnetischen Hochfrequenzwellen beaufschlagt, die von der Hochfrequenzquelle 9 bereitgestellt werden. Der akustooptische Strahlvereiniger 11 beinhaltet ein akustooptisches Element, in dem mit den elektromagnetischen Hochfrequenzwellen mechanische Wellen zum Ablenken oder Beugen von Lichtbündeln derart erzeugbar sind, dass die jeweils gewünschten Anteile des von dem AOTF 8 weitergeleiteten Licht und die jeweils gewünschten Anteile des Lichts der Weißlichtquelle 12 den akustooptische Strahlvereiniger 11 als vereinigtes Beleuchtungslichtbündel kollinear zueinander verlassen. Der akustooptische Strahlvereiniger 11 ist derart aufgebaut und wird derart betrieben, dass durch Wechselwirkung mit wenigstens einer mechanischen Welle sowohl das von dem AOTF 8 weitergeleitete Licht, als auch das Licht der Weißlichtquelle 12 gebeugt und dadurch auf eine gemeisame optische Achse gelenkt werden.

Das Mikroskop beinhaltet außerdem einen weiteren akustooptischen Strahlvereinger 13, der als Hauptstrahlteiler fungiert und die Aufgabe hat, Beleuchtungslicht 14 einer gewünschten Wellenlänge oder Beleuchtungslicht 14 mehrerer gewünschter Wellenlängen auf einen Beleuchtungslichtstrahlengang 15 zu lenken, und andererseits die Aufgabe, aus dem, von der beleuchteten Probe 16, die auf einem Objekttisch 17 angeordnet ist, ausgehenden, polychromatischen und kollinearen Detektionslichtbündel 18 (gestrichelt gezeichnet) die Anteile von an der Probe 16 gestreutem und/oder reflektiertem Beleuchtungslicht 15 zu entfernen.

Das von dem weiteren akustooptischen Strahlvereinger 13 auf den Beleuchtungsstrahlengang 15 gelenkte Beleuchtungslicht 14 gelangt zu einer Strahlablenkeinrichtung 24 die einen ersten Galvanometerspiegel 25 und einen zweiten Galvanometerspiegel 26 beinhaltet. Der übrige Teil des Primärlichtes 2 wird von der mechanischen Welle bzw. den mechanischen Wellen nicht beeinflusst und gelangt in Strahlfallen (nicht eingezeichnet).

Nach dem Verlassen der Strahlablenkeinrichtung 24 gelangt das Beleuchtungslicht 14 zur Scanlinse 27, dann zur Tubuslinse 28 und schließlich zu einem Objektiv 29, das das Beleuchtungslicht 14 auf bzw. in die Probe 16 fokussiert.

Die Strahlablenkeinrichtung 24 führt den Fokus des Beleuchtungslichts 14 vorzugsweise mäanderförmig über bzw. durch die Probe 16. Hierbei ist der Galvanometerspiegel 25 für die Ablenkung in X-Richtung zuständig, während der zweite Galvanometerspiegel 26 für die Ablenkung in Y-Richtung zuständig ist.

Auch der weitere akustooptische Strahlvereinger 13 ist mit wenigstens einer elektromagnetischen Hochfrequenzwelle beaufschlagt, um wenigstens eine mechanische Welle einer Frequenz zu erzeugen. Durch Ändern der Frequenz der elektromagnetischen Hochfrequenzwelle kann die Frequenz der mechanischen Welle geändert werden. Die Erzeugung der mechanischen Welle kann beispielsweise mit Hilfe eines Piezo-Schallerzeugers erfolgen.

Ein Kristall (in dieser Figur nicht dargestellt) des weiteren akustooptischen Strahlvereingers 13, in dem die mechanische Welle propagiert, und die Ausbreitungsrichtung der mechanischen Welle sind zu dem von der Probe 16 kommenden Detektionslichtbündel 18 derart ausgerichtet, dass der akustooptische Strahlvereinger 13 mit der mechanischen Welle sowohl den die Beleuchtungswellenlänge und eine erste Linearpolarisationsrichtung aufweisenden Anteil des Detektionslichtbündels 18, als auch den die Beleuchtungswellenlänge und eine zweite, zur ersten Linearpolarisationsrichtung senkrechten Linearpolarisationsrichtung aufweisenden Anteil des Detektionslichtbündels 18 ablenkt und dadurch aus dem Detektionslichtbündel 18 entfernt. Der verbliebene Anteil 19 des Detektionslichtbündels 18 verlässt den Kristall kollinear und gelangt nach Passieren eines AONF 20 (acousto optical notch filters), einer Abbildungsoptik 21 und einer Detektionslochblende 22 zu einem Detektor 23, der vorzugsweise als Multibanddetektor ausgeführt ist. Die elektrischen Signale des Detektors 23 werden zur Weiterverarbeitung und Auswertung an den PC 10 übergeben.

Das Mikroskop ist derart ausgestaltet, dass nicht nur Licht einer Wellenlänge als Beleuchtungslicht 14 auf den Beleuchtungsstrahlengang 15 gelenkt werden kann und nicht lediglich Licht einer Wellenlänge aus dem von der Probe 16 kommenden Detektionslichtbündel 18 entfernt werden kann, sondern dass mehrere mechanische Wellen gleichzeitig zum Entfernen von Beleuchtungslicht mehrerer unterschiedlicher Wellenlängen - und beider Linearpolarisationsrichtungen - aus dem Detektionslicht und/oder zum Lenken von Beleuchtungslicht mehrerer unterschiedlicher Wellenlängen - und beider Linearpolarisationsrichtungen - auf den Beleuchtungsstrahlengang zum Einsatz kommen, wobei jedoch in vorteilhafter Weise pro Beleuchtungslichtwellenlänge in dem Kristall des weiteren akustooptischen Strahlvereinigers 13 lediglich eine einzige mechanische Welle erzeugt wird.

Der weitere akustooptische Strahlvereiniger 13 wird für jede vom Benutzer gewünschte Beleuchtungslichtwellenlänge mit einer eigenen elektromagnetischen Hochfrequenzwelle beaufschlagt, die von der Hochfrequenzquelle 9 erzeugt wird. Der Vollständigkeit halber sei erwähnt, dass die unterschiedlichen Hochfrequenzwellen, die die Hochfrequenzquelle 9 für den AONF 20, den akustooptischen Strahlvereiniger 11, en AOTF 8 und für den weiteren akustooptischen Strahlvereiniger 13 bereitstellt, in aller Regel unterschiedliche Frequenzen aufweisen. Es ist jedoch auch möglich, die akustooptischen Bauteile derart auszubilden, dass zwei Hochfrequenzwellen derselben Frequenz für wenigstens von zwei akustooptischen Bauteile verwendet werden können.

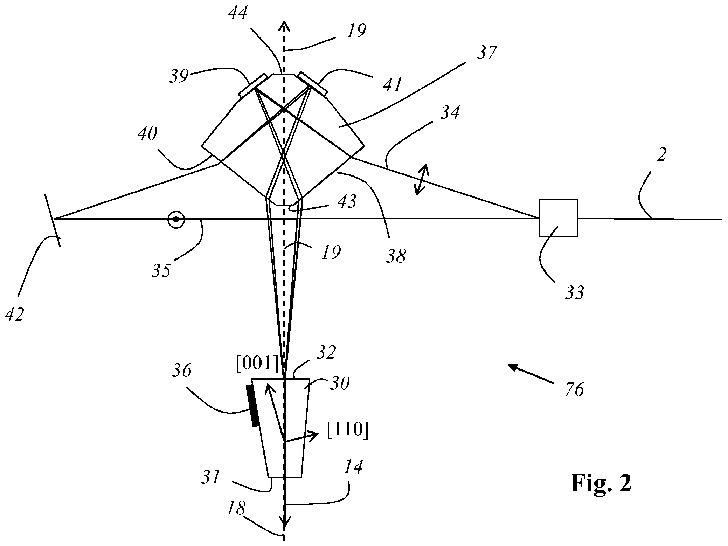

Fig. 2 zeigt schematisch ein Ausführungsbeispiel eines akustooptischen Strahlvereinigers 76.

Dem akustooptischen Strahlvereiniger 76 ist ein Polarisationsstrahlteiler 33 vorgeschaltet, der unpolarisiertes Primärlicht mehrerer Wellenlängen, insbesondere unpolarisiertes, breitbandiges Primärlicht 2, beispielsweise einer Weißlichtquelle, empfängt. Der Polarisationsstrahlteiler 33 spaltet das Primärlicht 2 in ein erstes Beleuchtungslichtbündel 34 und ein zweites Beleuchtungslichtbündel 35 räumlich auf, wobei das Licht der Beleuchtungslichtbündel 34, 35 zueinander senkrechte Linearpolarisationsrichtungen aufweist.

Der akustooptische Strahlvereiniger 76 beinhaltet einen Kristall 30 mit einer Eintrittsfläche 31 für das von einer Probe (hier nicht dargestellt) kommende Detektionslichtbündel 18 (gestrichelt eingezeichnet) und mit einer Austrittsfläche 32 für den verbliebenen Anteil 19 des Detektionslichtbündels 18, der letztlich zu einem Detektor (hier nicht eingezeichnet) geleitet wird. Die Austrittsfläche 32 für den verbliebenen Anteil 19 ist gleichzeitig die Eintrittsfläche zum Einkoppeln des ersten Beleuchtungslichtbündels 34 und des zweiten Beleuchtungslichtbündels 35 in den Kristall 30.

An dem Kristall 30 ist ein Piezo-Schallerzeuger 36 angeordnet, der mit einer elektromagnetischen Hochfrequenzwelle einer Frequenz oder mit mehreren elektromagnetischen Hochfrequenzwellen mehrerer Frequenzen zur Erzeugung einer mechanischen Welle bzw. mehrerer unterschiedlicher mechanischen Wellen beaufschlagt wird. Mit Hilfe der mechanischen Welle bzw. mit Hilfe der mehreren mechanischen Wellen können sowohl aus dem ersten Beleuchtungslichtbündel 34, als auch aus dem zweiten Beleuchtungslichtbündel 35 die Lichtanteile einer gewünschten Beleuchtungslichtwellenlänge bzw. die Lichtanteile mehrerer gewünschter Beleuchtungslichtwellenlängen durch Beugung abgelenkt und damit kollinear auf einen Beleuchtungsstrahlengang 15 gelenkt werden, wobei jeweils einer Frequenz der jeweiligen mechanischen Welle (insb. jeweils zur Erfüllung der Bragg-Bedingung) eine der Beleuchtungslichtwellenlängen - gleichzeitig für beide Linearpolarisationsrichtungen - zugeordnet ist.

Das Beleuchtungslicht 14 verlässt den Kristall 30 durch die Eintrittsfläche 31 für das Detektionslichtbündel 18, die somit gleichzeitig die Austrittsfläche für das Beleuchtungslicht 14 ist.

Gleichzeitig wird mit Hilfe der mechanischen Welle bzw. mit Hilfe der mechanischen Wellen aus dem Detektionslichtbündel 18 (gestrichelt gezeichnet) der Lichtanteil entfernt, der die Wellenlänge bzw. der die Wellenlängen des Beleuchtungslichts 14 aufweist, wobei der Kristall 30 und die Ausbreitungsrichtung der mechanischen Welle(n) zu dem von der Probe 16 kommenden Detektionslichtbündel 18 derart ausgerichtet sind, dass jede der mechanischen Wellen sowohl den die Beleuchtungswellenlänge und eine erste Linearpolarisationsrichtung aufweisenden Anteil des Detektionslichtbündels 18, als auch den die Beleuchtungswellenlänge und eine zweite, zur ersten Linearpolarisationsrichtung senkrechten Linearpolarisationsrichtung aufweisenden Anteil des Detektionslichtbündels 18 ablenkt und dadurch aus dem Detektionslichtbündel 18 entfernt. Der verbliebene Anteil 19 des Detektionslichtbündels 18 verlässt den Kristall durch die Austrittsfläche 32 kollinear. In der Figur ist die Ausrichtung der Kristallstruktur durch Einzeichnung der Kristallachsen [001] und [110] schematisch angedeutet.

Das erste Beleuchtungslichtbündel 34 wird entgegengesetzt der Richtung der ersten Beugungsordnung des ordentlichen Lichtes (bezogen auf den gebeugten Anteil des Detektionslichtes) in den Kristall 30 eingekoppelt, während das zweite Beleuchtungslichtbündel 35 entgegengesetzt der Richtung der ersten Beugungsordnung des außerordentlichen Lichts (bezogen auf den gebeugten Anteil des Detektionslichtes) in den Kristall 30 eingekoppelt wird. Auf diese Weise steht das gesamte Primärlicht 2 zur Verfügung, um aus diesem Primärlicht 2 Beleuchtungslicht 14 einer bestimmten Wellenlänge oder bestimmter Wellenlängen mit Hilfe der akustooptischen Vorrichtung auf den Beleuchtungslichtstrahlengang des Mikroskops und damit zur Probe zu lenken, wobei für jede Wellenlänge lediglich eine einzige mechanische Welle einer einzigen Frequenz benötigt wird.

Um eine Kollinearität des aus dem Kristall 30 austretenden Beleuchtungslichtbündels 14 zu erreichen, ist dem Kristall 30 ein dispersives optisches Bauteil 37 vorgeschaltet, das das erste Beleuchtungslichtbündel 34 und das zweite Beleuchtungslichtbündel 35 räumlich spektral aufspaltet, wobei das Ausmaß der räumlichen Aufspaltung (insbesondere durch Auswahl der Winkel und/oder der optischen Weglängen) derart festgelegt ist, dass sie von dem Kristall 30 wieder rückgängig gemacht wird.

Das dispersive optische Bauteil 37 weist ein Ein- und Auskoppelfenster 38 für das erste Beleuchtungslichtbündel 34 auf. Zunächst tritt das erste Beleuchtungslichtbündel 34 durch das Ein- und Auskoppelfenster 38 in das dispersive optische Bauteil 37 ein und wird nach Durchlaufen des dispersiven optischen Bauteils 37 von einem ersten Spiegel 39, der an einer dem Ein- und Auskoppelfenster 38 gegenüberliegenden Fläche angebracht ist, reflektiert, bevor das erste Beleuchtungslichtbündel 34 räumlich und spektral aufgespalten das dispersive optische Bauteil 37 durch das Ein- und Auskoppelfenster 38 wieder verlässt.

Analog weist das dispersive optische Bauteil 37 ein weiteres Ein- und Auskoppelfenster 40 für das von einem Umlenkspiegel 42 umgelenkte zweite Beleuchtungslichtbündel 35 auf. Zunächst tritt das zweite Beleuchtungslichtbündel 35 durch das weitere Ein- und Auskoppelfenster 40 in das dispersive optische Bauteil 37 ein und wird nach Durchlaufen des dispersiven optischen Bauteils 37 von einem zweiten Spiegel 41, der an einer dem weiteren Ein- und Auskoppelfenster 40 gegenüberliegenden Fläche angebracht ist, reflektiert, bevor das zweite Beleuchtungslichtbündel 35 räumlich und spektral aufgespalten das dispersive optische Bauteil 37 durch das weitere Ein- und Auskoppelfenster 40 wieder verlässt.

Das dispersive optische Bauteil 37 weist außerdem eine Einkoppelfläche 43 und eine dazu parallele Auskoppelfläche 44 für den verbliebenen Anteil 19 des Detektionslichtbündels 18 auf. Der verbliebene Anteil 19 des Detektionslichtbündels 18 tritt lotrecht sowohl durch die Einkoppelfläche 43 und die parallele Auskoppelfläche 44 und erfährt daher keine spektrale Aufspaltung.

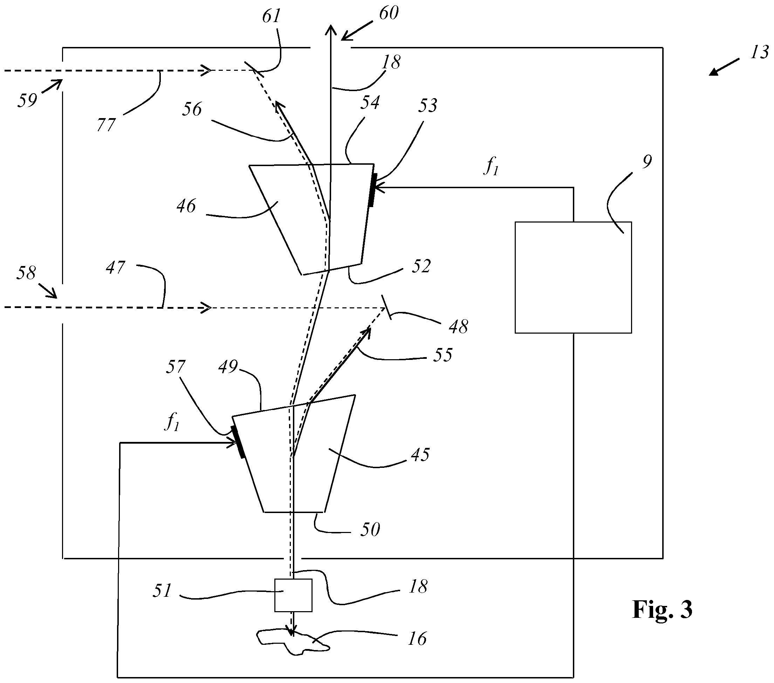

Fig. 3 zeigt ein zweites Ausführungsbeispiel eines akustooptischen Strahlvereinigers 13, der einen ersten Kristall 45 und einen zweiten Kristall 46 aufweist.

Der dargestellte akustooptische Strahlvereiniger 13 empfängt durch einen ersten Eingang 58 ein erstes Beleuchtungslichtbündel 47 einer nicht dargestellten Lichtquelle. Das erste Beleuchtungslichtbündel 47 wird mithilfe eines Spiegels 48 in Richtung auf den ersten Kristall 45 umgelenkt und tritt in diesen durch eine Eintrittsfläche 49 ein.

An dem ersten Kristall 45 ist ein erster Piezo-Schallerzeuger 57 angeordnet, der mit einer elektromagnetischen Hochfrequenzwelle der Frequenz f1 einer Hochfrequenzquelle 9 beaufschlagt ist und der eine durch den ersten Kristall 45 propagierende (nicht dargestellte) mechanische Welle einer der Frequenz f1 entsprechenden Schallfrequenz erzeugt.

Durch Wechselwirkung mit der mechanischen Welle wird das erste Beleuchtungslichtbündel 47, das eine der Schallfrequenz zugeordnete Bleuchtungslichtwellenlänge aufweist, zur Beleuchtung einer Probe 16 auf einen Beleuchtungsstrahlengang abgelenkt. Das abgelenkte Beleuchtungslichtbündel 47 verlässt den ersten Kristall 45 durch ein eine Austrittsfläche 50 und gelangt über eine Scan- und Optikanordnung 51 eines Mikroskops, die insbesondere wenigstens eine Scaneinrichtung und ein Mikroskopobjektiv beinhaltet, zu der zu beleuchtenden Probe 16.

Der akustooptische Strahlvereiniger 13 weist einen zweiten Kristall 46 auf. An dem zweiten Kristall 46 ist ein zweiter Piezo-Schallerzeuger 53 angeordnet, der ebenfalls mit einer elektromagnetischen Hochfrequenzwelle der Frequenz f1 der Hochfrequenzquelle 9 beaufschlagt ist und der eine durch den zweiten Kristall 45 propagierende (nicht dargestellte) zweite mechanische Welle einer der Frequenz f1 entsprechenden Schallfrequenz erzeugt.

Der zweite Kristall empfängt ein durch einen zweiten Eingang 59 des Strahlvereinigers 13 eintretendes zweites Beleuchtungslichtbündel 77, das dieselbe Wellenlänge, jedoch eine andere, nämlich zur Linearpolarisationsrichtung des ersten Beleuchtungslichtbündels 47 senkrechte Linearpolarisationsrichtung aufweist. Das zweite Beleuchtungslichtbündel 77 wird mithilfe eines Spiegels 61 in Richtung auf den zweiten Kristall 46 umgelenkt und tritt in diesen durch seine Eintrittsfläche 54 ein.

Durch Wechselwirkung mit der zweiten mechanischen Welle, die in dem zweiten Kristall 46 propagiert, wird das zweite Beleuchtungslichtbündel 77 abgelenkt und auf einen Strahlengang gelenkt, der durch den ersten Kristall 45 verläuft. Nachdem das zweite Beleuchtungslichtbündel 77 den zweiten Kristall 46 durch dessen Austrittsfläche 52 verlassen hat gelangt es zum ersten Kristall 45. In dem ersten Kristall 45 wird das zweite Beleuchtungslichtbündel 77 druch die erste mechanische Welle, die in dem ersten Kristall 45 propagiert, nicht abgelenkt. Das erste Beleuchtungslichtbündel 47 wird in dem ersten Kristall 45 auf den Lichtweg des zweiten Beleuchtungslichtbündels 77 gebeugt. Die Beleuchtungslichtbündel 47, 77 verlassen den ersten Kristall 45 als kollinear vereinigtes Beleuchtungslichtbündel.

Dass mit Schallwellen derselben Schallfrequenz in beiden Kristallen 45, 46 einerseits in dem ersten Kristall 45 das erste Beleuchtungslichtbündel 47 und andererseits in dem zweiten Kristall 46 das zweite Beleuchtungslichtbündel 77, abgelenkt wird, wobei das erste Beleuchtungslichtbündel 47 den ersten Kristall durch dessen mechanische Welle unbeeinflusst durchläuft, ist dadurch erreicht, dass, die Kristalle 45, 46 hinsichtlich wenigstens eines Parameters, wie beispielsweise Kristallschnitt und/oder Kristallausrichtung und/oder Ausbreitungsrichtungen der mechanischen Welle und des Lichtes, derart verschieden und aufeinander abgestimmt sind, dass jeweils die Bragg-Bedingung für das jeweils abzulenkende Beleuchtungslichtbündel 47, 77 erfüllt ist.

Das von der Probe 16 ausgehende Detektionslichtbündel 18 gelangt auf umgekehrtem Lichtweg wie die kolinear vereinigten Beleuchtungslichtbündel 47, 77 zu dem ersten Kristall 45 zurück und tritt in diesen durch die Austrittsfläche 50 ein. Durch Wechselwirkung mit der mechanischen Welle des ersten Kristalls 45 wird ein erster Teil 55 des Detektionslichts, der die Bleuchtungslichtwellenlänge und eine erste Linearpolarisationsrichtung aufweist, abgelenkt und dadurch aus dem Detektionslichtbündel 18 entfernt. Der verbliebene Teil des Detektionslichtbündels 18 tritt durch die Eintrittsfläche 49 aus dem ersten Kristall 45 aus und gelangt anschließend zur Austrittsfläche 52 des zweiten Kristalls 46.

Durch Wechselwirkung mit der zweiten mechanischen Welle, die in dem zweiten Kristall 46 propagiert, wird ein zweiter Teil 56 des Detektionslichts, der die Bleuchtungslichtwellenlänge und eine zweite, zur ersten Linearpolarisationsrichtung senkrechte Linearpolarisationsrichtung aufweist, abgelenkt und dadurch aus dem Detektionslichtbündel 18 entfernt. Der verbliebene Teil des Detektionslichtbündels 18 tritt durch die Eintrittsfläche 54 aus dem zweiten Kristall 46 aus und gelangt anschließend zu einem nicht dargestellten Detektor.

Dass mit Schallwellen derselben Schallfrequenz in beiden Kristallen 45, 46 nacheinander sowohl der erste Teil 55 des Detektionslichts, der die Beleuchtungslichtwellenlänge und eine erste Linearpolarisationsrichtung, als auch der zweite Teil 56 des Detektionslichts, der die Beleuchtungslichtwellenlänge und eine zweite, zur ersten Linearpolarisationsrichtung senkrechte Linearpolarisationsrichtung aufweist, abgelenkt werden kann, ist, wie oben bereits in Bezug auf die Beleuchtungslichtbündel 47, 77 beschrieben, dadurch erreicht, dass, die Kristalle 45, 46 hinsichtlich wenigstens eines Parameters, wie beispielsweise Kristallschnitt und/oder Kristallausrichtung und/oder Ausbreitungsrichtungen der mechanischen Welle und des Lichtes, derart verschieden und aufeinander abgestimmt sind, dass jeweils die Bragg-Bedingung für das abzulenkende Licht erfüllt ist.

Die Kristalle sind derart ausgebildet und angeordnet, dass das dem Detektor zuzuführende Detektionslicht den akustooptischen Strahlvereiniger 13 durch einen Ausgang 60 als kollineares Lichtbündel verlässt. Dies ist insbesondere dadurch erreicht, dass die Eintrittsfläche 54 und die Austrittsfläche 50 parallel zueinander ausgerichtet sind.

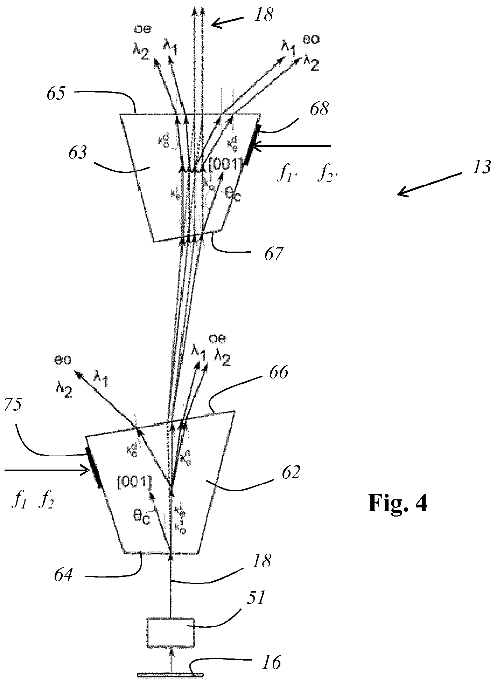

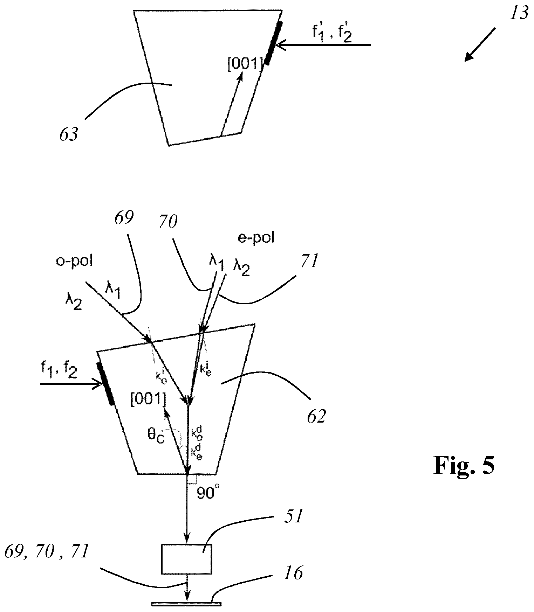

Fig. 4 zeigt ein drittes Ausführungsbeispiel eines akustooptischen Strahlvereingers 13, der als Hauptstrahlteiler eines Mikroskops fungiert, wobei jedoch der besseren Übersichtlichkeit halber in dieser Figur lediglich der Verlauf des von der Probe 16 kommenden Detektionslichtes und das Entfernen der Anteile, die die Beleuchtungslichtwellenlängen λ1 und λ2 aufweisen, aus dem von der Probe 16 kommenden Detektionslicht dargestellt ist. Der Verlauf des Beleuchtungslichtes ist in Figur 5 dargestellt.

Der akustooptische Strahlvereiniger 13 weist einen ersten Kristall 62 auf, an dem ein erster Piezo-Schallerzeuger 75 angeordnet ist, der mit zwei elektromagnetischen Hochfrequenzwellen der Frequenzen f1 und f2 beaufschlagt ist und der zwei durch den ersten Kristall 62 propagierende (nicht dargestellte) mechanische Wellen jeweils einer der Frequenzen f1 und f2 entsprechenden Schallfrequenz erzeugt.

Der erste Kristall 62, hinsichtlich seiner Kristallstruktur, und die Ausbreitungsrichtungen der mechanischen Wellen sind relativ zueinander und jeweils relativ zu dem in den Kristall einfallenden Detektionslichtbündel 18 derart ausgerichtet, dass mit der mechanischen Welle sowohl der die Beleuchtungswellenlängen λ1 und λ2 und eine erste Linearpolarisationsrichtung aufweisende Anteil des Detektionslichtbündels 18, als auch der die Beleuchtungswellenlängen λ1 und λ2 und eine zweite, zur ersten Linearpolarisationsrichtung senkrechten Linearpolarisationsrichtung aufweisende Anteil des Detektionslichtbündels ablenkt und dadurch aus dem Detektionslichtbündel 18 entfernt werden.

Die entfernten Anteile sind in der Figur mit oe und eo bezeichnet. Die erste Linearpolarisationsrichtung ist bei diesem Ausführungsbeispiel die Linearpolarisationsrichtung des ordentlichen Lichtes bezogen auf eine Doppelbrechungseigenschaft des Kristalls 62, während die zweite Linearpolarisationsrichtung bei diesem Ausführungsbeispiel die Linearpolarisationsrichtung des außerordentlichen (extraordenary) Lichtes bezogen auf eine Doppelbrechungseigenschaft des Kristalls 62 ist. Durch die Bezeichnungen oe und eo soll zum Ausdruck gebracht werden, dass die Linearpolarisationsrichtung des einfallenden Detektionslichts jeweils um 90° (von ordinary nach extraordinary bzw. umgekehrt) durch die Wechselwirkung mit den mechanischen Wellen gedreht wird.

Der akustooptische Strahlvereiniger 13 weist außerdem einen zweiten Kristall 63 auf, der das aus dem ersten Kristall 62 austretende, verbliebene Detektionslicht empfängt. Dieses Detektionslicht ist räumlich sowohl hinsichtlich seiner Polarisation, als auch hinsichtlich seiner Wellenlänge aufgespalten. Der zweite Kristall 63 ist jedoch derart ausgestaltet, dass das aus ihm austretende Detektionslichtbündel 18, das einem (nicht dargestellten) Detektor zugeleitet wird, kolinear vereinigt ist. Dies ist dadurch erreicht, dass das Austrittsfenster 64 des ersten Kristalls 62 parallel zum Eintrittsfenster 65 des zweiten Kristalls 63 angeordnet ist und dass zusätzlich das Eintrittsfenster 66 des ersten Kristalls 62 parallel zum Austrittsfenster 67 des zweiten Kristalls 63 angeordnet ist. Es sei zur Klarstellung nochmals darauf hingewiesen, dass sich die Begriffe "Eintrittsfläche" und "Austrittsfläche" auf den Verlauf des Bleuchtungslichtes beziehen, so dass das in umgekehrter Richtung zum Beleuchtungslicht verlaufende Detektionslicht durch eine Eintrittsfläche austritt und durch eine Austrittsfläche eintritt.

Der zweite Kristall 63 dient zum einen dazu, möglicherweise noch im Detektionslicht - trotz der Wechselwirkung mit den mechanischen Wellen des ersten Kristalls 62 - verbliebene Anteile der Bleuchtungslichtwellenlängen λ1 und λ2 zu entfernen. Darüber hinaus kann der zweite Kristall 63 dazu dienen, wenigstens einen weiteren Eingang für auf die Probe zu lenkendes Beleuchtungslicht bereit zu stellen, was hier nicht näher dargestellt ist.

An dem zweiten Kristall 63 ist ein zweiter Piezo-Schallerzeuger 68 angeordnet ist, der mit zwei elektromagnetischen Hochfrequenzwellen der Frequenzen f1` und f2' beaufschlagt ist und der zwei durch den zweiten Kristall 63 propagierende (nicht dargestellte) mechanische Wellen jeweils einer der Frequenzen f1' und f2' entsprechenden Schallfrequenz erzeugt.

Der zweite Kristall 63, hinsichtlich seiner Kristallstruktur, und die Ausbreitungsrichtungen der mechanischen Wellen sind relativ zueinander und jeweils relativ zu dem in den Kristall einfallenden Detektionslichtbündel 18 derart ausgerichtet, dass mit der mechanischen Welle sowohl der die Beleuchtungswellenlängen λ1 und λ2 und eine erste Linearpolarisationsrichtung aufweisende Anteil des Detektionslichtbündels 18, als auch der die Beleuchtungswellenlängen λ1 und λ2 und eine zweite, zur ersten Linearpolarisationsrichtung senkrechten Linearpolarisationsrichtung aufweisende Anteil des Detektionslichtbündels ablenkt und dadurch aus dem Detektionslichtbündel 18 entfernt werden.

Fig. 5 zeigt, wie Beleuchtungslicht der Beleuchtungslichtwellenlängen λ1 und λ2, das sowohl eine erste Linearpolarisationsrichtung, als auch eine zweite, von der ersten Linearpolarisationsrichtung verschiedene Linearpolarisationsrichtung aufweist, mit dem in Bezug auf Figur 3 bereits näher beschriebenen akustooptischen Strahlvereiniger 13 kollinear auf einen Beleuchtungsstrahlengang zur Beleuchtung einer Probe 16 gelenkt wird.

In der folgenden Beschreibung wird das Beleuchtungslicht ausschließlich über den ersten Kristall 62 und durch Wechselwirkung mit der in diesem Kristall 62 propagierenden (nicht dargestellten) mechanischen Wellen dargestellt. Es ist jedoch - alternativ oder zusätzlich - auch möglich, Beleuchtungslicht über den zweiten Kristall 63 einzukoppeln und auf den Beleuchtungsstrahlengang zur Beleuchtung einer Probe 16 zu lenken.

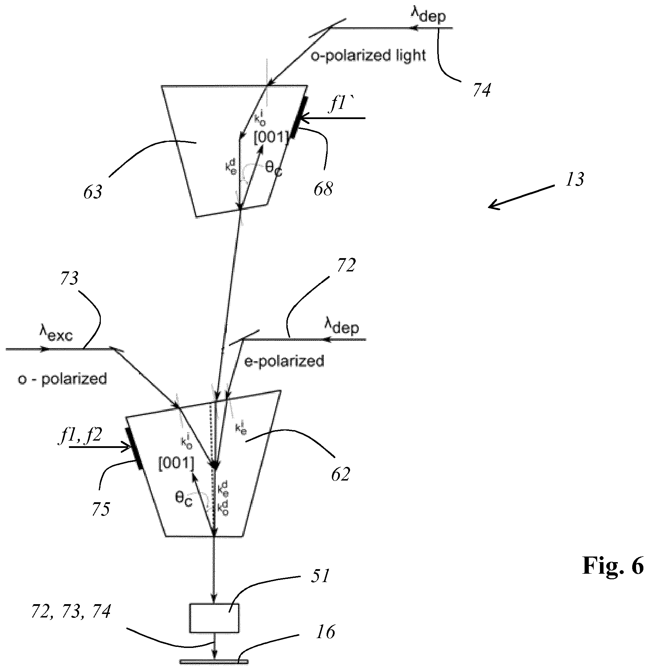

Das Einkoppeln der Beleuchtungslichtbündel erfolgt auf dem Lichtweg, auf dem die die Bleuchtungslichtwellenlängen aufweisenden Anteile des Detektionslichts von dem Detektionslichtbündel 18 , wie in Figur 6 dargestellt, entfernt werden.

Aufgrund des besonderen Kristallschnitts des ersten Kristalls 62 wird ein erstes Beleuchtungslichtbündel 69, das eine erste Linearpolarisationsrichtung (in der Figur mit "opol" gekennzeichnet) und Anteile beider Bleuchtungslichtwellenlängen λ1 und λ2 aufweist, als kolineares Beleuchtungslichtbündel eingekoppelt. Durch Wechselwirkung mit den mechanischen Wellen wird das Licht auf einen Beleuchtungsstrahlengang zur Beleuchtung einer Probe 16 gelenkt. Es gelangt über eine Scan- und Optikanordnung 51 eines Mikroskops, die insbesondere wenigstens eine Scaneinrichtung und ein Mikroskopobjektiv beinhaltet, zu der zu beleuchtenden Probe 16.

Darüber hinaus wird ein zweites Beleuchtungslichtbündel 70, das Licht der Bleuchtungslichtwellenlänge λ1 und die zweite Linearpolarisationsrichtung aufweist, sowie ein drittes Beleuchtungslichtbündel 71, das Licht der Bleuchtungslichtwellenlänge λ2 und ebenfalls die zweite Linearpolarisationsrichtung aufweist, als räumlich separate Beleuchtungslichtbündel 70, 71 eingekoppelt. Auch das Licht dieser Beleuchtungslichtbündel 70, 71 gelangt durch Wechselwirkung mit den mechanischen Wellen, die in dem ersten Kristall 62 propagieren, auf den Beleuchtungsstrahlengang und über die Scan- und Optikanordnung 51 eines Mikroskops zu der Probe 16.

Licht, das nicht die Bleuchtungslichtwellenlänge λ1 oder die Bleuchtungslichtwellenlänge λ2 aufweist, wird nicht auf den Beleuchtungsstrahlengang, sondern in eine nicht dargestellte Strahlfalle gelenkt.

Fig. 6 zeigt das dritte Ausführungsbeispiel in Bezug auf eine spezielle Verwendungsmöglichkeit in der STED-Mikroskopie, wobei lediglich der Verlauf des Beleuchtungslichtes, mit dem die Probe beaufschlagt wird, eingezeichnet ist, jedoch - der besseren Übersichtlichkeit halber - nicht der Verlauf des Detektionslichtes.

Das Auflösungsvermögen eines konfokalen Scanmikroskops ist unter anderem durch die Intensitätsverteilung und die räumliche Ausdehnung des Fokus des Anregungslichtbündels in der Probe gegeben. Eine Anordnung zur Steigerung des Auflösungsvermögens für Fluoreszenzanwendungen ist aus der WO 95/21393 A1 bekannt. Hierbei werden die lateralen Randbereiche des Fokusvolumens des Anregungslichtbündels mit dem, ggf. besonders geformten, Fokus eines weiteren Lichtbündels einer anderen Wellenlänge, dem sog. Abregungslichtbündel, beleuchtet, um dort die vom Anregungslichtbündel angeregten Probenbereiche stimuliert in den Grundzustand zurück zu bringen. Detektiert wird dann nur das spontan emittierte Licht aus den nicht vom Abregungslichtbündel beleuchteten Bereichen, so daß insgesamt eine Auflösungsverbesserung erreicht wird. Für dieses Verfahren hat sich die Bezeichnung STED (Stimulated Emission Depletion) eingebürgert.

Bei dem in Fig. 6 dargestellten Ausführungsbeispiel wird der akustooptische Strahlteiler 13 dazu genutzt, sowohl zwei, aus unterschiedlichen Richtungen kommende Abregungslichtbündel 72, 74 jeweils der Wellenlänge λdep und unterschiedlicher Linearpolarisation, als auch Anregungslicht der Wellenlänge λexc auf einen Beleuchtungsstrahlengang zur Beleuchtung einer Probe 16 zu lenken.

Der Piezo-Schallerzeuger 75 des ersten Kristalls 62 ist mit einer Hochfrequenzwelle der Frequenz f1 und mit einer Hochfrequenzwelle der Frequenz f2 beaufschlagt und erzeugt zwei durch den ersten Kristall 62 propagierende (nicht dargestellte) mechanische Wellen jeweils einer der Frequenzen f1 und f2 entsprechenden Schallfrequenz.

Das Anregungslichtbündel 73 der Wellenlänge λexc wird über den ersten Kristall 62 eingekoppelt. Durch Wechselwirkung mit der mechanischen Welle, die durch die Beaufschlagung des Piezo-Schallerzeugers 75 mit der Hochfrequenzwelle der Frequenz f2 erzeugt ist, wird das Anregungslichtbündel 73 gebeugt und auf einen Beleuchtugsstrahlengang zur Beleuchtung einer Probe 16 gelenkt. Die Einkopplung über den ersten Kristall 62 ist von besonderem Vorteil, weil das an der Probe 16 reflektierte Anregungslicht sowohl im ersten Kristall 62 mit der dort propagierenden mechansichen Welle der Frequenz f2, als auch mit einer in dem zweiten Kristall 63 propagierenden mechanischen Welle aus dem Detektionslicht herausgefiltert werden kann.

Das erste Abregungslichtbündel 72 mit außerordnetlicher Linearpolarisationsrichtung wird ebenfalls über den ersten Kristall 62 eingekoppelt und durch Wechselwirkung mit der mechanischen Welle, die durch die Beaufschlagung des Piezo-Schallerzeugers 75 mit der Hochfrequenzwelle der Frequenz f1 erzeugt ist, gebeugt und auf den Beleuchtugsstrahlengang zur Beleuchtung der Probe 16 gelenkt. Das erste Abregungslichtbündel 72 und das Anregungslichtbündel 73 verlassen den Kristall 62 demgemäß kollinear vereinigt.

Der Piezo-Schallerzeuger 68 des zweiten Kristalls 63 ist mit einer Hochfrequenzwelle der Frequenz f1` beaufschlagt und erzeugt eine durch den zweiten Kristall 63 propagierende (nicht dargestellte) mechanische Welle einer der Frequenz f1` entsprechenden Schallfrequenz. Durch Wechselwirkung mit dieser mechanischen Welle wird das zweite Abregungslichtbündel 74 der Wellenlänge λdep, das eine ordentliche Linearpolarisationsrichtung bezogen auf die Doppelbrechungseigenschaft des zweiten Kristalls 63 aufweist, gebeugt und verläuft anschließend durch die dort propagierenden mechanischen Wellen unabgelenkt durch den ersten Kristall 62 auf den Beleuchtungsstrahlengang und gelangt schließlich zur Probe 16. Das zweite Abregungslichtbündel 74 erfährt durch die in dem ersten Kristall propagierenden mechanischen Wellen keine Abkenkung, weil die Bragg-Bedingung nicht erfüllt ist. Das zweite Abregungslichtbündel 74, das erste Abregungslichtbündel 72 und das Anregungslichtbündel 73 verlassen den Kristall 62 demgemäß kollinear vereinigt und treffen nach Druchlaufen einer Scan- und Optikanordnung 51 eines Mikroskops, die insbesondere wenigstens eine Scaneinrichtung und ein Mikroskopobjektiv beinhaltet, zu der zu beleuchtenden Probe 16.

In dem Strahlengang des ersten Abregungslichtbündels 72 kann beispielsweise ein (nicht dargestelltes) Element zum Verändern der Form des Beleuchtungslichtfokus des Abregungslichtbündels 72 vorgesehen sein. Beispielsweise kann dieses Element einen Phasenfilter oder einen Verlaufsphasenfilter oder einen Segmenphasentfilter oder eine schaltbare Phasenmatrix, insbesondere eine LCD-Matrix, aufweisen. Insbesondere kann vorgesehen sein, dass mit Hilfe des Elements zum Verändern der Form des Beleuchtungslichtfokus ein ringförmiger Fokus in der Probe 16, ein sog. Dougnut-Fokus, erzeugt wird, der mit dem Fokus des Anregungslichtbündels 73 in der x-y-Ebene, also in einer Ebene senkrecht zur optischen Achse, überlappt, um eine Auflösungssteigerung in x-y-Richtung zu bewirken. Ein ringförmiger Fokus kann beispielsweise mit einem sog. Vortexphasenfilter erzielt werden.

In dem Strahlengang des zweiten Abregungslichtbündels 74 kann ebenfalls ein (nicht dargestelltes) weiteres Element zum Verändern der Form des Beleuchtungslichtfokus des Abregungslichtbündels 72 vorgesehen sein. Insbesondere kann vorgesehen sein, dass mit Hilfe des weiteren Elements zum Verändern der Form des Beleuchtungslichtfokus ein Doppelfokus erzeugt wird, der mit dem Fokus des Anregungslichtbündels 73 in z-Richtung, vorzugsweise oberhalb und unterhalb der Mitte des Fokus des Anregungslichtbündels 73, überlappt, um eine Auflösungssteigerung in z-Richtung zu bewirken.

Der in Figur 6 gezeigte Strahlvereiniger wurde in Bezug auf die spezielle Verwendung in der STED-Mikroskopie beschrieben. Allerdings ist es auch möglich, den Strahlvereiniger in der beschreibenen Weise auch zum Vereinigen von Beleuchtungslichtbündeln für andere Anwendungen zu verwenden.

Insoweit ist der in Figur 6 dargestellte akustooptische Strahlvereiniger eine spezielle Ausführung einer allgemeineren Lösung der genannten Aufgabe, bei der der akustooptische Strahlvereiniger einen ersten Kristall aufweist, durch den eine erste mechansiche Welle propagiert, und einen zweiten Kristall aufweist, durch den eine zweite mechansiche Welle propagiert, wobei das erste Beleuchtungslichtbündel durch Wechselwirkung mit der ersten mechanischen Welle gebeugt und auf die gemeinsame optische Achse gelenkt wird und wobei das zweite Beleuchtungslichtbündel durch Wechselwirkung mit der zweiten mechanischen Welle gebeugt und auf die gemeinsame optische Achse gelenkt wird und wobei das gebeugte zweite Beleuchtungslichtbündel den ersten Kristall ohne Wechselwirkung mit der ersten mechanischen Welle druchläuft und kollinear, also auf einer gemeinsamen otischen Achse, mit dem ersten Beleuchtungslichtbündel aus dem ersten Kristall austritt.

Auch bei diesem Ausführungsbeispiel werden, unabhängig von deren Polarisation, die Anteile des Detektionslichtes aus dem von der Probe ausgehenden Detektionslichtbündel entfernt, die die Wellenlänge des Beleuchtungslichtes aufweisen.

Jedoch wird, wie zuvor ausführlich beschrieben, auch bei diesem Ausführungsbeispiel die Anteile aus dem vom der Probe kommenden Detektionslichtbündel entfernt, die Wellenlänge λexc des Anregungslichts aufweist.

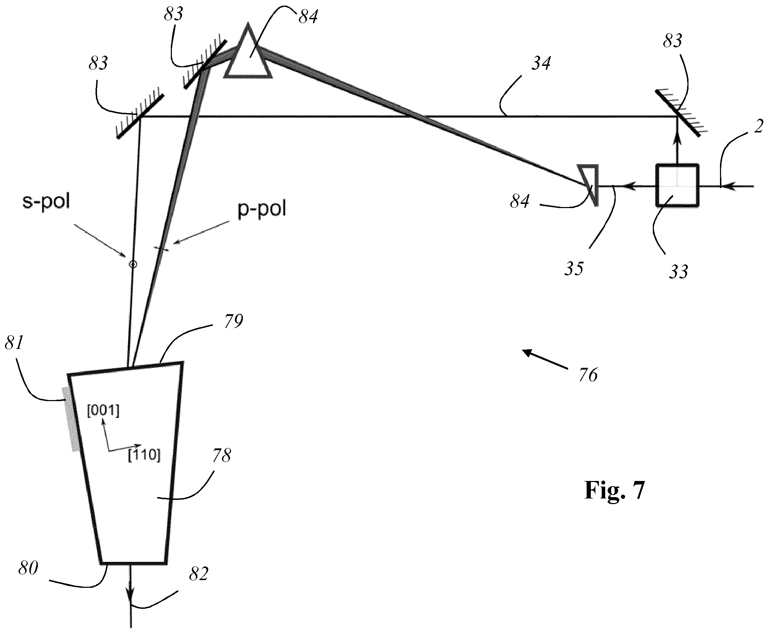

Fig. 7 zeigt ein viertes Ausführungsbeispiel eines akustooptischen Strahlvereingers 76.

Dem akustooptischen Strahlvereiniger 76 ist ein Polarisationsstrahlteiler 33 vorgeschaltet, der unpolarisiertes Primärlicht mehrerer Wellenlängen, insbesondere unpolarisiertes, breitbandiges Primärlicht 2, beispielsweise einer Weißlichtquelle, empfängt. Der Polarisationsstrahlteiler 33 spaltet das Primärlicht 2 in ein erstes Beleuchtungslichtbündel 34 und ein zweites Beleuchtungslichtbündel 35 räumlich auf, wobei das Licht der Beleuchtungslichtbündel 34, 35 zueinander senkrechte Linearpolarisationsrichtungen aufweist.

Der akustooptische Strahlvereiniger 76 beinhaltet einen Kristall 78 mit einer Eintrittsfläche 79 für die beiden Beleuchtungslichtbündel 34, 35 und eine Austrittsfläche 80, durch die das vereinigte, kollineare Beleuchtungslichtbündel den Kristall 78 verlässt. An dem Kristall 78 ist ein Piezo-Schallerzeuger 81 angeordnet, der mit einer elektromagnetischen Hochfrequenzwelle einer Frequenz oder mit mehreren elektromagnetischen Hochfrequenzwellen mehrerer Frequenzen zur Erzeugung einer mechanischen Welle bzw. mehrerer unterschiedlicher mechanischen Wellen beaufschlagt wird. Mit Hilfe der mechanischen Welle bzw. mit Hilfe der mehreren mechanischen Wellen können sowohl aus dem ersten Beleuchtungslichtbündel 34, als auch aus dem zweiten Beleuchtungslichtbündel 35 die Lichtanteile einer gewünschten Beleuchtungslichtwellenlänge bzw. die Lichtanteile mehrerer gewünschter Beleuchtungslichtwellenlängen durch Beugung abgelenkt und damit als kollinear vereinigtes Beleuchtungslichtbündel 82 auf einen gemeinsamen Beleuchtungsstrahlengang gelenkt werden, wobei jeweils einer Frequenz der jeweiligen mechanischen Welle (insb. jeweils zur Erfüllung der Bragg-Bedingung) eine der Beleuchtungslichtwellenlängen - gleichzeitig für beide Linearpolarisationsrichtungen - zugeordnet ist.

Der akustooptische Strahlvereiniger 76 weist die Besonderheit auf, dass er, insbesondere bedingt durch den besonderen Aufbau und die besondere Ausrichtung des Kristalls 78, lediglich das zweite Beleuchtungslichtbündel 35 räumlich spektral aufspalten würde, während der auf den Beleuchtungsstrahlengang gelenkte Anteil des ersten Beleuchtungslichtbündel 34 keine räumliche Aufspaltung erfährt. Im Strahlengang des ersten Beleuchtungslichtbündels 34 bedarf es daher keiner Kompensationselemente, wie beispielsweise Prismen. Daher beinhaltet der Strahlengang des ersten Beleuchtungslichtbündels 34 lediglich einige Umlenkspiegel 83, um das erste Beleuchtungslichtbündel 34 von dem Polarisationsstrahlteiler 33 zu dem Kristall 78 zu lenken. Lediglich im Strahlengang des zweiten Beleuchtungslichtbündels 35 sind, neben einem Umlenkspiegel 83, zwei Prismen 84 angeordnet, die das zweiten Beleuchtungslichtbündel 35 räumlich sepektral so aufspalten, dass die Aufspaltung beim Durchlaufen des Kristalls 78 wieder rückgängig gemacht wird.

Die Erfindung wurde in Bezug auf eine besondere Ausführungsform beschrieben, wobei für gleiche oder gleichwirkende Bauteile zumeist dieselben Bezugszeichen verwendet sind. Es ist jedoch selbstverständlich, dass Änderungen und Abwandlungen durchgeführt werden können, ohne dabei den Schutzbereich der nachstehenden Ansprüche zu verlassen.

## Patentansprüche

1. Mikroskop mit einem akustooptischen Strahlvereiniger (13), wobei der akustooptische Strahlvereiniger (13) wenigstens ein erstes Beleuchtungslichtbündel (47) und ein zweites Beleuchtungslichtbündel (77) empfängt und zu einem kollinearen Ausgangslichtbündel vereinigt, wobei das erste Beleuchtungslichtbündel (47) und das zweite Beleuchtungslichtbündel (77) dieselbe Beleuchtungslichtwellenlänge, jedoch eine unterschiedliche Polarisation, insbesondere Linearpolarisation, aufweisen, wobei der Strahlvereiniger (13) als akustooptischer Strahlvereiniger (13) ausgebildet und derart aufgebaut und betrieben ist, dass durch Welchselwirkung mit wenigstens einer mechanischen Welle sowohl das erste Beleuchtungslichtbündel (47), als auch das zweite Beleuchtungslichtbündel (77) gebeugt und dadurch auf eine gemeisame optische Achse gelenkt werden, **dadurch gekennzeichnet, dass** der akustooptische Strahlvereiniger (13) einen ersten Kristall (45) aufweist, durch den eine erste mechanische Welle propagiert, und einen zweiten Kristall (46) aufweist, durch den eine zweite mechanische Welle propagiert, wobei das erste Beleuchtungslichtbündel (47) durch Wechselwirkung mit der ersten mechanischen Welle gebeugt und auf die gemeinsame optische Achse gelenkt wird und wobei das zweite Beleuchtungslichtbündel (77) durch Wechselwirkung mit der zweiten mechanischen Welle gebeugt und auf die gemeinsame optische Achse gelenkt wird und wobei das gebeugte zweite Beleuchtungslichtbündel (77) den ersten Kristall (45) mit der ersten mechanischen Welle ungebeugt durchläuft, und dass der Strahlvereiniger (13) als Hauptstrahlteiler fungiert, der Beleuchtungslicht auf einen Beleuchtungslichtstrahlengang zur Beleuchtung einer Probe (16) lenkt und der von der Probe (16) ausgehendes Detektionslicht (18) auf einen Detektionsstrahlengang mit einem Detektor (23) lenkt.

2. Mikroskop nach Anspruch 1, **dadurch gekennzeichnet, dass** das Mikroskop als Scanmikroskop oder konfokales Scanmikroskop ausgebildet ist.

3. Mikroskop nach Anspruch 1 oder 2, **dadurch gekennzeichnet, dass** Kristallschnitt und/oder Kristallausrichtung und/oder Ausbreitungsrichtungen der mechanischen Welle und der Beleuchtungslichtbündel (47, 77), derart verschieden und aufeinander abgestimmt sind, dass jeweils die Bragg-Bedingung für das jeweils abzulenkende Beleuchtungslichtbündel (47, 77) erfüllt ist.

4. Mikroskop nach einem der Ansprüche 1 bis 3, **dadurch gekennzeichnet, dass** der akustooptische Strahlvereiniger (13) von einer Probe (16) ausgehendes Detektionslicht (18) empfängt und aus diesem Detektionslicht (18) die Anteile (55, 56) entfernt, die die Beleuchtungslichtwellenlänge und/oder eine weitere Beleuchtungslichtwellenlänge und/oder eine andere Beleuchtungslichtwellenlänge aufweisen.

5. Mikroskop nach einem der Ansprüche 1 bis 4, **dadurch gekennzeichnet, dass**
a. der zweite Kristall (46) und die Ausbreitungsrichtung der zweiten mechanischen Welle relativ zueinander und jeweils relativ zu dem in den zweiten Kristall einfallenden Detektionslichtbündel derart ausgerichtet sind, dass der akustooptische Strahlvereiniger (13) mit der zweiten mechanischen Welle sowohl den die weitere Beleuchtungswellenlänge und eine erste Linearpolarisationsrichtung aufweisenden Anteil des Detektionslichtbündels (18), als auch den die weitere Beleuchtungswellenlänge und eine zweite, zur ersten Linearpolarisationsrichtung senkrechten Linearpolarisationsrichtung aufweisenden Anteil des Detektionslichtbündels (18) ablenkt und dadurch aus dem Detektionslichtbündel (18) entfernt.

6. Mikroskop nach einem der Ansprüche 1 bis 5, **dadurch gekennzeichnet, dass** das Detektionslichtbündel (18) zuerst den Kristall (45) und anschließend den zweiten Kristall (46) durchläuft.

7. Mikroskop nach einem der Ansprüche 1 bis 6, **dadurch gekennzeichnet, dass** die strahlführenden Komponenten des Strahlvereinigers (13) derart angeordnet und ausgebildet sind, dass der verbliebene Teil des Detektionslichtbündels (18) den akustooptischen Strahlvereiniger (13) kollinear verlässt.

8. Verwendung eines Mikroskops nach einem der Ansprüche 1 bis 7 zur Untersuchung einer Probe (18) in der STED-Mikroskopie (Stimulated Emission Depletion) oder in der CARS-Mikroskopie (Coherent Anti Stokes Raman Spectroscopy) oder in der SRS-Mikroskopie (Stimulated Raman Scattering) oder in der CSRS-Mikroskopie (Coherent Stokes Raman Scattering) oder in der Rikes-Mikroskopie (Raman induced Kerr-Effect Scattering).

## Claims

1. Microscope comprising an acousto-optic beam combiner (13), wherein the acousto-optic beam combiner (13) receives at least a first illumination light beam (47) and a second illumination light beam (77) and combines them to form a collinear output light beam, wherein the first illumination light beam (47) and the second illumination light beam (77) have the same illumination light wavelength but a different polarization, in particular linear polarization, wherein the beam combiner (13) is configured as an acousto-optic beam combiner (13) and is constructed and operated in such a way that by way of interaction with at least one mechanical wave, both the first illumination light beam (47) and the second illumination light beam (77) are diffracted and thereby directed onto a common optical axis, **characterized in that** the acousto-optic beam combiner (13) has a first crystal (45), through which a first mechanical wave propagates, and has a second crystal (46), through which a second mechanical wave propagates, wherein the first illumination light beam (47) is diffracted and directed onto the common optical axis by way of interaction with the first mechanical wave and wherein the second illumination light beam (77) is diffracted and directed onto the common optical axis by way of interaction with the second mechanical wave and wherein the diffracted second illumination light beam (77) passes through the first crystal (45) without being diffracted by the first mechanical wave, and **in that** the beam combiner (13) functions as a main beam splitter which directs illumination light onto an illumination light beam path for illuminating a sample (16) and which directs detection light (18) emanating from the sample (16) onto a detection beam path having a detector (23).

2. Microscope according to Claim 1, **characterized in that** the microscope is configured as a scanning microscope or a confocal scanning microscope.

3. Microscope according to Claim 1 or 2, **characterized in that** crystal cut and/or crystal orientation and/or directions of propagation of the mechanical wave and of the illumination light beams (47, 77) are different and coordinated with one another in such a way that the Bragg condition is in each case satisfied for the illumination light beam (47, 77) to be deflected in each case.

4. Microscope according to any of Claims 1 to 3, **characterized in that** the acousto-optic beam combiner (13) receives detection light (18) emanating from a sample (16) and removes from said detection light (18) the portions (55, 56) having the illumination light wavelength and/or a further illumination light wavelength and/or a different illumination light wavelength.

5. Microscope according to any of Claims 1 to 4, **characterized in that**
a. the second crystal (46) and the direction of propagation of the second mechanical wave are oriented relative to one another and in each case relative to the detection light beam incident in the second crystal in such a way that the acousto-optic beam combiner (13) with the second mechanical wave deflects both the portion of the detection light beam (18) that has the further illumination wavelength and a first linear polarization direction and the portion of the detection light beam (18) that has the further illumination wavelength and a second linear polarization direction, which is perpendicular to the first linear polarization direction, and thereby removes them from the detection light beam (18).

6. Microscope according to any of Claims 1 to 5, **characterized in that** the detection light beam (18) passes firstly through the crystal (45) and then through the second crystal (46).

7. Microscope according to any of Claims 1 to 6, **characterized in that** the beam guiding components of the beam combiner (13) are arranged and configured in such a way that the remainder of the detection light beam (18) leaves the acousto-optic beam combiner (13) collinearly.

8. Use of a microscope according to any of Claims 1 to 7 for examining a sample (18) by way of STED (Stimulated Emission Depletion) microscopy or by way of CARS (Coherent Anti-Stokes Raman Spectroscopy) microscopy or by way of SRS (Stimulated Raman Scattering) microscopy or by way of CSRS (Coherent Stokes Raman Scattering) microscopy or by way of RIKES (Raman Induced Kerr-Effect Scattering) microscopy.

## Revendications

1. Microscope, comprenant un combinateur de faisceau acousto-optique (13), dans lequel le combinateur de faisceau acousto-optique (13) reçoit au moins un premier faisceau lumineux d'éclairage (47) et un deuxième faisceau lumineux d'éclairage (77) et les combine en un faisceau lumineux de sortie colinéaire, dans lequel le premier faisceau lumineux d'éclairage (47) et le deuxième faisceau lumineux d'éclairage (77) présentent la même longueur d'onde de lumière d'éclairage, mais une polarisation différente, en particulier une polarisation linéaire, dans lequel le combinateur de faisceau (13) est réalisé sous forme de combinateur de faisceau acousto-optique (13) et est construit et exploité de telle sorte que par interaction avec au moins une onde mécanique, à la fois le premier faisceau lumineux d'éclairage (47) et le deuxième faisceau lumineux d'éclairage (77) sont diffractés et ainsi dirigés sur un axe optique commun,
**caractérisé en ce que** le combinateur de faisceau acousto-optique (13) présente un premier cristal (45) à travers lequel se propage une première onde mécanique, et un deuxième cristal (46) à travers lequel se propage une deuxième onde mécanique, dans lequel le premier faisceau lumineux d'éclairage (47) est diffracté et dirigé sur l'axe optique commun par une interaction avec la première onde mécanique, et dans lequel le deuxième faisceau lumineux d'éclairage (77) est diffracté et dirigé sur l'axe optique commun par une interaction avec la deuxième onde mécanique, et dans lequel le deuxième faisceau lumineux d'éclairage (77) diffracté passe par le premier cristal (45) avec la première onde mécanique sans diffraction, et **en ce que** le combinateur de faisceau (13) sert de séparateur de faisceau principal qui dirige la lumière d'éclairage sur une trajectoire de faisceau de lumière d'éclairage pour éclairer un échantillon (16) et qui dirige la lumière de détection (18) émanant de l'échantillon (16) sur une trajectoire de faisceau de détection à l'aide d'un détecteur (23).

2. Microscope selon la revendication 1, **caractérisé en ce que** le microscope est réalisé sous forme de microscope à balayage ou de microscope confocal à balayage.

3. Microscope selon la revendication 1 ou 2, **caractérisé en ce que** la coupe du cristal et/ou l'orientation du cristal et/ou les directions de propagation de l'onde mécanique et du faisceau lumineux d'éclairage (47, 77) se distinguent et sont accordées les unes aux autres de telle sorte que respectivement la condition de Bragg est satisfaite pour le faisceau lumineux d'éclairage (47, 77) respectivement à dévier.

4. Microscope selon l'une quelconque des revendications 1 à 3, **caractérisé en ce que** le combinateur de faisceau acousto-optique (13) reçoit la lumière de détection (18) émanant d'un échantillon (16) et supprime de cette lumière de détection (18) les parties (55, 56) qui présentent la longueur d'onde de lumière d'éclairage et/ou une longueur d'onde de lumière d'éclairage supplémentaire et/ou une autre longueur d'onde de lumière d'éclairage.

5. Microscope selon l'une quelconque des revendications 1 à 4, **caractérisé en ce que**
a. le deuxième cristal (46) et la direction de propagation de la deuxième onde mécanique l'un par rapport à l'autre et respectivement par rapport au faisceau de lumière de détection incident sur le deuxième cristal sont orientés de telle sorte que le combinateur de faisceau acousto-optique (13) dévie par la deuxième onde mécanique à la fois la partie du faisceau de lumière de détection (18) présentant la longueur d'onde d'éclairage supplémentaire et une première direction de polarisation linéaire et la partie du faisceau de lumière de détection (18) présentant la longueur d'onde d'éclairage supplémentaire et une deuxième direction de polarisation linéaire, perpendiculaire à la première direction de polarisation linéaire et les supprime ainsi du faisceau de lumière de détection (18).

6. Microscope selon l'une quelconque des revendications 1 à 5, **caractérisé en ce que** le faisceau de lumière de détection (18) passe d'abord par le cristal (45) et ensuite par le deuxième cristal (46).

7. Microscope selon l'une quelconque des revendications 1 à 6, **caractérisé en ce que** les composants de guidage de faisceau du combinateur de faisceau (13) sont disposés et réalisés de telle sorte que la partie restante du faisceau de lumière de détection (18) quitte le combinateur de faisceau acousto-optique (13) de manière colinéaire.

8. Utilisation d'un microscope selon l'une quelconque des revendications 1 à 7 pour examiner un échantillon (18) en microscopie STED (Stimulated Emission Depletion) ou en microscopie CARS (Coherent Anti Stokes Raman Spectroscopy) ou en microscopie SRS (Stimulated Raman Scattering) ou en microscopie CSRS (Coherent Stokes Raman Scattering) ou en microscopie Rikes (Raman induced Kerr-Effect Scattering).
